# EUROPEAN PATENT APPLICATION

(11) **EP 4 819 744 A1**
(43) Date of publication of application: **07.10.2026**
(21) Application number: 23959910.3
(22) Date of filing: 30.11.2023
(51) Int. Cl.: H04W 72/56

(54) **COMMUNICATION METHODS, COMMUNICATION APPARATUS, DEVICES, MEDIUM, CHIP, PRODUCT AND PROGRAM**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); LUO, Chaoming, Dongguan, Guangdong 523860 (CN)
(74) Representative: Taor, Simon Edward William
(86) International application number: PCT/CN2023/135698
(87) International publication number: WO 2025/111999

(57) **Abstract**

The present application provides communication methods, communication apparatuses, devices, a medium, a chip, a product, and a program. A method comprises: a first device transmits a first data unit, the first data unit comprising one or more of the following: a first receiver address (RA), a first transmitter address (TA), a first traffic identifier (TID), a first priority, a first mark, a first sequence (SN) number, wherein the first SN and/or the first PN are determined on the basis of one or more of the following: the first RA, the first TA, the first TID, the first priority, the first mark, whether out-of-order transmission is used and an out-of-order transmission mode.

## Description

### TECHNICAL FIELD

Embodiments of the present application relate to the technical field of communication, and in particular to a communication method, a communication apparatus, a device, a medium, a chip, a product, and a program.

### BACKGROUND

Wireless Fidelity (WiFi) technology based on IEEE 802.11 is a currently widely used Wireless network transmission technology. How to transmit data units by WiFi Media Access Control (MAC) has always been a concern in this field.

### SUMMARY

Embodiments of the present application provide a communication method, a communication apparatus, a device, a storage medium, a chip and a program.

In a first aspect, an embodiment of the present application provides a communication method, which includes the following operation.

A first device transmits a first data unit. The first data unit comprises one or more of following: a first receiver address (RA), a first transmitter address (TA), a first traffic identifier (TID), a first priority, a first flag, a first sequence number (SN), or a first packet number (PN).

The first SN and/or the first PN are determined according to one or more of following: the first RA, the first TA, the first TID, the first priority, the first flag, whether out-of-order transmission is performed, or an out-of-order transmission mode.

In a second aspect, an embodiment of the present application provides a communication method, which includes the following operation.

A second device receives one or more data units. Each of at least a part of data units comprises one or more of following: TA, RA, TID, priority, flag, SN, or PN.

The SN and/or PN comprised in the each data unit are determined according to one or more of following: TA, RA, TID, priority, flag, whether out-of-order transmission is performed, or out-of-order transmission mode.

In a third aspect, an embodiment of the present application provides a communication apparatus, which includes a communication unit.

The communication unit is configured to transmit a first data unit. The first data unit comprises one or more of following: a first RA, a first TA, a first TID, a first priority, a first flag, a first SN, or a first PN.

The first SN and/or the first PN are determined according to one or more of following: the first RA, the first TA, the first TID, the first priority, the first flag, whether out-of-order transmission is performed, or an out-of-order transmission mode.

In a fourth aspect, an embodiment of the present application provides a communication apparatus, which includes a communication unit.

The communication unit is configured to receive one or more data units. Each of at least a part of data units comprises one or more of following: TA, RA, TID, priority, flag, SN, or PN.

The SN and/or PN comprised in the each data unit are determined according to one or more of following: TA, RA, TID, priority, flag, whether out-of-order transmission is performed, or out-of-order transmission mode.

In a fifth aspect, an embodiment of the present application provides a first device, which comprises a processor, a memory, and a transceiver.

The processor is configured to invoke and execute a computer program stored in the memory, and the processor and the transceiver cooperate to enable the first device to implement the method of the first aspect.

In a sixth aspect, an embodiment of the present application provides a second device, which comprises a processor, a memory, and a transceiver.

The processor is configured to invoke and execute a computer program stored in the memory, and the processor and the transceiver cooperate to enable the second device to implement the method of the second aspect.

In a seventh aspect, an embodiment of the present application provides a computer storage medium, which stores one or more computer programs, and the one or more computer programs are executable by one or more processors to implement the method of the first aspect or the second aspect.

In an eighth aspect, an embodiment of the present application provides a chip, which comprises a processor for invoking and executing a computer program from a memory to implement a method of the first aspect or the second aspect.

In a ninth aspect, an embodiment of the present application provides a computer program product, which comprises a computer storage medium. The computer storage medium stores a computer program comprising instructions executable by at least one processor, and when the instructions are executed by the at least one processor, the method of the first aspect or the second aspect is implemented.

In a tenth aspect, a computer program causes a computer to implement the method of the first aspect or the second aspect.

Through the above technical solutions, since the first data unit transmitted by the first device includes the first TID, and different TIDs correspond to different traffic flows or different transmission latencies or different transmission urgency degrees or different QoS requirements, the data unit(s) is identified by the first TID, so that when the transmission priority corresponding to the first TID is high, the data unit(s) corresponding to the first TID can be transmitted in priority, and the transmission of the data unit(s) can meet the QoS requirements thereof, thereby improving the transmission efficiency of the data unit(s). In addition, since the first SN and/or the first PN are determined according to one or more of the following: the first RA, the first TA, the first TID, the first priority, the first flag, whether out-of-order transmission is performed, or an out-of-order transmission mode, the SN and/or the PN in each data unit can be determined according to the transmission information of the data unit, and each data unit can be transmitted according to the determined SN and/or the PN in each data unit, thereby improving the reliability of data unit transmission.

### BRIEF DESCRIPTION OF THE DRAWINGS

The accompanying drawings illustrated herein are used to provide further understanding of the disclosure and constitute a part of the disclosure, and illustrative embodiments of the disclosure and their description are used to explain the disclosure instead of constituting improper limitation to the disclosure. In the accompanying drawings, the following figures are shown.
Fig. 1 is an example of a communication system architecture applicable to an embodiment of the present application.
FIG. 2 is a schematic diagram of an application scenario of an embodiment of the present application.
FIG. 3 is a schematic diagram of an application scenario of an embodiment of the present application.
Fig. 4 is a schematic diagram of out-of-order delivery provided by an embodiment of the present application.
Fig. 5 is another schematic diagram of out-of-order delivery provided by an embodiment of the present application.
Fig. 6 is a schematic diagram of flow chart of a communication method provided by an embodiment of the present application.
Fig. 7 is another flow chart of a communication method provided by an embodiment of the present application.
Fig. 8 is a schematic structure diagram of a communication apparatus provided by an embodiment of the present application.
Fig. 9 is a schematic structure diagram of another communication apparatus provided by an embodiment of the present application.
Fig. 10 is a schematic structure diagram of a communication device provided by an embodiment of the present application.
Figure 11 is a schematic structure diagram of a chip of an embodiment of the present application.

### DETAILED DESCRIPTION

Hereinafter, the technical solutions in the embodiments of the present application will be described with reference to the accompanying drawings in the embodiments of the present application, and it is obvious that the described embodiments are part of the embodiments of the present application, but not all the embodiments. On the basis of the embodiments in the present application, all other embodiments obtained by those skilled in the art without creative work fall within the scope of protection of the present application.

The technical solutions of the embodiments of the present application can be applied to various communication systems, such as wireless local area networks (WLAN), wireless fidelity (WiFi), or other communication systems, etc. The frequency bands that can be supported by WLAN technology may include, but are not limited to, low frequency bands (e.g., 2.4 GHz, 5 GHz, 6 GHz), and high frequency bands (e.g., 45 GHz, 60 GHz).

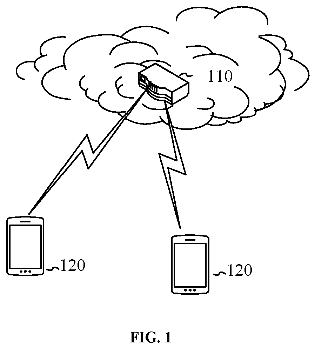

Fig. 1 is an example of a communication system architecture applicable to an embodiment of the present application. As shown in Fig. 1, the communication system 100 may include an access point 110, and a station (STA) 120 that accesses the network through the access point (AP) 110. In some scenarios, the AP 110 may also be referred to as an AP STA, that is, the AP 110 is also a STA in a sense. In some scenarios, the STA 120 may be referred to as a non-AP STA. In some scenarios, the STA 120 may include an AP STA and a non-AP STA. The communication in the communication system 100 may include a communication between an AP and a STA 120, a communication between a STA 120 and a STA 120, or a communication between an STA 120 and a peer STA. The peer STA may refer to a device that communicates with the STA 120 on the opposite end, for example, the peer STA may be an AP or a non-AP STA.

AP 110 may be used as a bridge connecting the wired network and the wireless network. Its main function is to connect various wireless network clients together, and then connect the wireless network to Ethernet. The AP 110 may be a terminal device (such as a mobile phone) or network device (such as a router) with a WiFi chip.

It should be noted that, the role of the STA 120 in the communication system is not absolute, that is, the role of the STA 120 in the communication system may be switched between the AP and the STA. For example, in some scenarios, when a mobile phone connects to a router, the mobile phone may be a STA, while in a case where the mobile phone serves as a hotspot for other mobile phones, the mobile phone acts as an AP.

In some embodiments, AP 110 and STA 120 may be devices used in the Internet of Vehicles, internet of things (IoT) nodes, sensors, and the like, in IoT, smart cameras, smart remote controllers, smart water meters, and the like, in smart homes, and sensors in smart cities.

In some embodiments, AP 110 may be a device supporting the 802.11be standard. The AP may be a device supporting various current and future 802.11 family WLAN standards such as 802.11ax, 802.11ac, 802.11n, 802.11g, 802.11b, and 802.11a. In some embodiments, STA 120 may support the 802.11be standard. The STA may support various current and future 802.11 family WLAN standards, such as 802.11ax, 802.11ac, 802.11n, 802.11g, 802.11b, and 802.11a.

In some embodiments, AP 110 and/or STA 120 may be deployed on land, including indoor or outdoor, handheld, wearable, or vehicle-mounted. They can also be deployed on the water (such as on ships). They can also be deployed in the air (such as on aircrafts, balloons and satellites).

In some embodiments, the AP 110 or the STA 120 may be an Internet of Things (IoT) device supporting WLAN/WiFi technology, a satellite terminal, a wireless local loop (WLL) station, a personal digital assistant (PDA), a handheld device with Wireless communication functions, a computing device, or other processing device connected to a Wireless modem, a server, a mobile phone, a pad, a computer with wireless transceiver function, a handheld computer, a desktop computer, a personal digital assistant, a portable media player, a smart speaker, a navigation device, a wearable device such as a smart watch, smart glasses, a smart necklace, a pedometer, a digital TV, a virtual reality (VR) terminal device, an augmented reality (AR) terminal device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, and a vehicle in an internet of vehicles system, a vehicle-mounted device, a vehicle-mounted module, a wireless modem, a handheld device, a customer premise equipment (CPE), a smart home appliance, a vehicle-mounted communication device, a wireless communication chip, an application specific integrated circuit (ASIC) or a system on chip (SoC), etc.

Exemplarily, the STA 120 may also be a wearable device. Wearable devices can also be called wearable smart devices, which are a general term for wearable devices developed by applying wearable technology to intelligently design daily wear, such as glasses, gloves, watches, clothing and shoes. A wearable device is a portable device that is worn directly on the body or integrated into a user's clothing or accessories. Wearable devices are not only hardware devices, but also realize powerful functions through software support, data interaction and cloud interaction. Broadly defined wearable smart devices include those with comprehensive functions, large size, and the ability to perform complete or partial functions without relying on a smartphone. For example: smart watches or smart glasses, etc., and only focus on a certain type of application function and need to be used in conjunction with other devices such as smart phones, such as various smart bracelets and smart jewelry for physical sign monitoring.

It should be understood that FIG. 1 is merely an example of the present application and should not be construed as limiting the present application. For example, FIG. 1 exemplarily illustrates one AP and two STAs. In some embodiments, the communication system 100 may also include multiple APs, and other numbers of STAs, which are not limited by the embodiments of the present application.

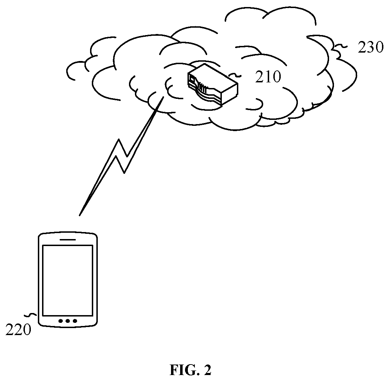

FIG. 2 is a schematic diagram of an application scenario of an embodiment of the present application. As shown in FIG. 2, the communication system may include an AP Multi-Link Device (MLD) 210 and a non-AP MLD 220. The AP MLD 210 is an electronic device capable of forming a wireless local area network 230 based on transmitted signals, such as a router, a mobile phone having a hotspot function, or the like, and a non-AP MLD 220 is an electronic device accessed to the wireless local area network 230 formed by the AP MLD 210, such as a mobile phone, a smart washing machine, air conditioner, electronic lock, or the like. The non-AP MLD 220 communicates with the AP MLD 210 through a wireless local area network 230. The AP MLD 210 may be a soft AP MLD, a Mobile AP MLD, or the like.

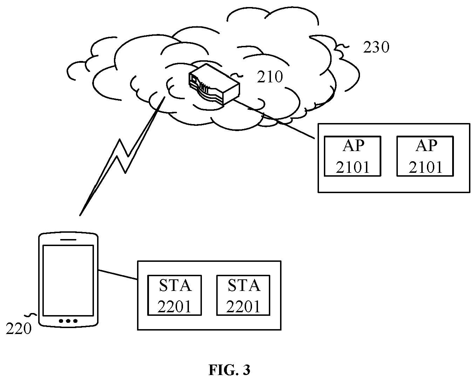

FIG. 3 is a schematic diagram of another application scenario of an embodiment of the present application. As shown in FIG. 3, in the communication system described in FIG. 3, at least two APs 2101 are affiliated to the AP MLD 210, and at least two stations (STAs) 2201 are affiliated to the non-AP MLD 220. Each AP is connected to a different STA in the non-AP MLD 220 through a different link. Here, an AP affiliated to an AP MLD may also be referred to as an affiliated AP of the AP MLD, and a STA affiliated to a non-AP MLD may also be referred to as an affiliated STA of the non-AP MLD.

In the embodiments of the present application, the AP MLD 210 and the non-AP MLD 220 may be terminal devices.

In any embodiment of the present application, the terminal device may refer to an access terminal, a User Equipment (UE), a subscriber unit, a subscriber station, a mobile station, a mobile terminal, a remote station, a remote terminal, a mobile device, a user terminal, a terminal, a radio communication device, a user agent, or a user device. For example, the terminal device may include any one of the following or a combination of at least two of them: an Internet of Things (IoT) device, a satellite terminal, a wireless local loop (WLL) station, a personal digital assistant (PDA), a handheld device with Wireless communication functions, a computing device, or other processing device connected to a Wireless modem, a server, a mobile phone, a pad, a computer with wireless transceiver function, a handheld computer, a desktop computer, a personal digital assistant, a portable media player, a smart speaker, a navigation device, a wearable device such as a smart watch, smart glasses, a smart necklace, a pedometer, a digital TV, a virtual reality (VR) terminal device, an augmented reality (AR) terminal device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, and a vehicle in an internet of vehicles system, a vehicle-mounted device, a vehicle-mounted module, a wireless modem, a handheld device, a customer premise equipment (CPE), a smart home appliance, a vehicle-mounted communication device, a wireless communication chip, an application specific integrated circuit (ASIC) and a system on chip (SoC), etc.

The network device may also be included in the communication system shown in FIG. 2 and FIG. 3, the network device may be an access network device that communicates with the terminal device. The access network device may provide communication coverage for a particular geographic area and may communicate with a terminal device located within that coverage area.

FIG. 2 and FIG. 3 exemplarily illustrate one AP MLD and one non-AP MLD. Alternatively, the communication system may include multiple non-AP MLDs that are accessed to the wireless local area network 230, which are not limited by the embodiments of the present application.

It should be noted that FIG. 1, FIG. 2 and FIG. 3 only illustrate a system applicable to the present application in the form of an example, and of course, the method shown in the embodiments of the present application can also be applied to other systems. Further, the terms "system" and "network" are often used interchangeably herein. Herein, the term "and/or" is only an association relationship describing associated objects, and means that there may be three relationships, for example, A and/or B, which may mean that A alone exists, A and B simultaneously exist, and B alone exists. In addition, the character "/" herein generally indicates that the related objects before and after this character are in an "or" relationship. It should also be understood that the "indication" mentioned in the embodiments of the present application may be a direct indication, an indirect indication, or an associated relationship. For example, A indicates B, which may mean that A directly indicates B, for example, B can be acquired by A. It may also mean that A indicates B indirectly, for example, A indicates C, and B can be obtained through C. It may also mean that there is an association relationship between A and B. It should also be understood that "correspondence" mentioned in the embodiments of the present application may indicate that there is a direct correspondence or indirect correspondence between the two, may indicate that there is a correlation relationship between the two, or may indicate a relationship between indicating and being indicated, configuring and being configured, or the like. It should also be understood that the "predefined" or "predefined rules" mentioned in the embodiments of the present application may be implemented by storing corresponding codes, tables, or other manners that can be used to indicate relevant information in advance in devices (e.g., including terminal devices and network devices), and the present application does not limit specific implementations thereof. For example, predefined may refer to defined in the protocol. It should also be understood that in the embodiments of the present application, the "protocol" may refer to a standard protocol in the field of communication, and may include, for example, an LTE protocol, an NR protocol, and related protocols applied to future communication systems, and the present application does not limit this.

In order to facilitate understanding of the technical solutions of the embodiments of the present application, the technical solutions of the present application will be described in detail below with reference to specific embodiments. Any one or more of the schemes in the above embodiments can be used as optional solutions and can be arbitrarily combined with the technical solutions of the embodiments of the present application, and all of them belong to the scope of protection of the embodiments of the present application. Embodiments of the present application include at least some of the following.

In-order transmission mechanism provided by Wi-Fi MAC is described below.

The MAC data service of WiFi provides a peer logical link control (LLC) sublayer entity or IEEE 802.1Q bridge port with the ability to switch Medium access control Service Data Units (MSDUs). To support this service, the local MAC uses the underlying physical layer service to transmit the MSDU to the peer MAC entity, where the MSDU is transferred to the peer LLC sublayer or bridge port. This asynchronous MSDU transfer is performed on a connectionless basis. By default, MSDU transmission is based on best effort. However, the Quality of Service (QoS) data uses a traffic identifier (TID) to specify different services on a per-MSDU basis.

A Station (STA) maintains one or more sequence number spaces for determining the sequence number of a frame when the frame is transmitted. When a plurality of sequence number spaces are supported, the appropriate sequence number space is determined by the information of the MAC control field of the frame to be transmitted. For each MSDU (if not in an Aggregation-Medium access control Service Data Unit (A-MSDU)) or an A-MSDU or Medium access control Management Protocol Data Unit (MMPDU) transmitted using this sequence number space, each sequence number space is represented by a modulus 4096 (i.e., 2^12) counter, incremented by 1 starting from 0.

A Multi-Link Device (MLD) maintains one or more sequence number spaces that are used when an affiliated STA of an MLD sends an individually addressed QoS data frame to a STA associated with the associated MLD to determine the sequence number of frame.

The sequence number space may contain one counter or multiple counters.

Medium Access Control Protocol Data Units (MPDUs) belonging to the same MSDU or A-MSDU shall have the same sequence number. Different MSDUs, A-MSDUs or MMPDUs (most likely) have different sequence numbers.

Robust security network association (RSNA) confidentiality and integrity protocols are described below.

The Wi-Fi standard defines the following RSNA confidentiality and integrity protocols: Counter with cipher-block chaining message authentication code protocol (CTR with CBC-MAC protocol, CCMP) and galois/counter mode protocol (GCMP).

CCMP provides data confidentiality, authentication, integrity, and replay protection. CCMP is a Counter-Mode/CBC-MAC (CCM) based on the advanced encryption standard (AES) encryption algorithm. CCM combines a counter (CTR) for data confidentiality and a cipher-block chaining message authentication code (CBC-MAC) for verification and integrity. The CCM protects the integrity of MPDU data fields and the selected portions of IEEE 802.11 MPDU headers. CCM is a general mode that can be used for any block-oriented encryption algorithm. CCM requires a new temporary key for each session. CCM also requires each frame protected by a given temporary key to have a unique nonce value. Reusing a random value with the same temporary key may make all security guarantees invalid.

For a secure protocol version (PV) 0 MPDU, CCMP encrypts the frame body field of the plaintext MPDU and encapsulates the generated cipher text. By incrementing the packet number (PN), a new non-zero PN is obtained for each MPDU, so that the PN will not repeat for the same temporary key.

The PN values are sequentially numbered for each MPDU. Each sending STA that is not affiliated with the MLD shall maintain a single PN (48-bit counter) for each pairwise transient key security association (PTKSA) and group temporary key security association (GTKSA). Each sending STA that is affiliated with the MLD shall use the PN (48-bit counter) maintained by the MLD for the PTKSA, or the PN maintained by the STA for the GTKSA. PN should be implemented as a 48-bit strictly incrementing integer that initializes to 0 when the corresponding temporary key is initialized or refreshed (via key update).

The PN value of each MPDU is incremented by a positive number. For MPDUs consisting of fragmented MSDU, A-MSDU, and MMPDU, PN shall be incremented with a stride of 1. For a PV0 MPDU, the PN of a series of encrypted MPDUs using the same temporary key is not duplicated. For a PV1 MPDU, the PN of a series of encrypted MPDUs using the same temporary key and partial TID (PTID) will never be repeated. For example, PTID is the 3 least significant bits of TID.

When the PN space is exhausted (i.e., the PN exceeds the lowest PN exhaustion threshold and the highest PN exhaustion threshold), the available options are to replace the corresponding key or terminate the communication. If an individually addressed MPDU is sent by an MLD through an affiliated STA to a receiving MLD, a single PN space shall be reserved for the PTKSA for transmission through all affiliated STAs.

The recipient shall discard any received data frame whose PN is less than or equal to the value of the replay counter associated with the TA, receiver address or receiving station address (RA), and priority value of the received MPDU. If the MPDU is an individually addressed data frame transmitted through the affiliated STA between the AP MLD and the non-AP MLD associated with the AP MLD, the recipient shall discard any received data frame whose PN is less than or equal to the value of the replay counter associated with the sending MLD MAC address, the receiving MLD MAC address (personal or group address), and the priority value of the receiving MPDU.

For the individually addressed MPDU received by the affiliated STA from the sending MLD, the receiving MLD shall maintain a set of replay counters of the PTKSA for all affiliated STAs.

The following describes the out-of-order transmission scheme.

In some embodiments, it is proposed to allow a Media Access Control Service Access Point (MAC SAP, or MAC-SAP) to optionally delivery out-of-order packets for a specific traffic identifier (TID) in response to a head of line blocking problem for WiFi, where the number of specific TIDs may be limited to 1 or 2, and it may be limited to be used at the time of establishment of streams that may benefit from out-of-order packet delivery (e.g., following a corresponding stream classification service (SCS) negotiation). Meanwhile, PN spaces used by a frame requiring out-of-order transmission and by a frame requiring in-order transmission are distinguished.

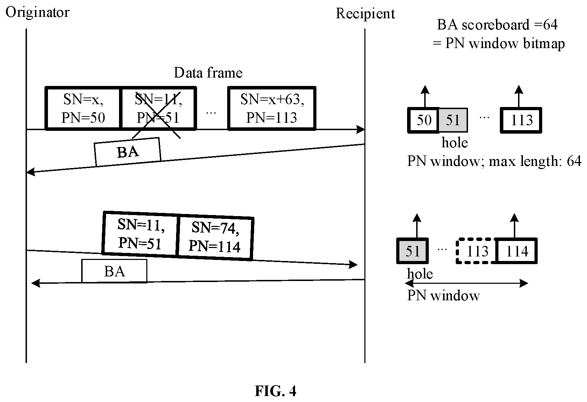

FIG. 4 is a schematic diagram of out-of-order delivery provided by an embodiment of the present application. As shown in FIG. 4, the originator transmits a data frame to the recipient. In out-of-order delivery, although the recipient cannot successfully receive the MPDU with sequence number (serial number, SN) of 11 and PN of 51 sent by the originator at first, the received MPDU (such as PN of 50 (corresponding SN = x) and/or 113 (corresponding SN = x +63)) is still transferred to the next MAC process, that is, performing replay detection. Next, the MPDU with PN 51 is received and then it is transferred to the next MAC process together with the MPDU received later (for example, the MPDU corresponding to SN =74 and PN =114).

In FIG. 4, each time the recipient receives a plurality of MPDUs, it is necessary to reply to the originator with a block acknowledgment (BA) frame. The BA frame contains a block acknowledgment bitmap (BA Bitmap) field, and each bit in the BA bitmap field corresponds to whether each MPDU is correctly received.

In FIG. 4, the maximum length (max length) of the PN window is 64, the size of the BA scoreboard is equal to the length of the PN window bitmap and is equal to 64. Hole corresponds to an unreceived MPDU with SN of 11 and PN of 51. The PN window may be updated in the case of a received MPDU having a SN of 11 and a PN of 51.

In some embodiments, for the head of line blocking problem, an independent PN sequence and replay counter for low-latency packets is proposed to facilitate earlier processing of low-latency packets while continuing to support replay detection of other packets in the same TID.

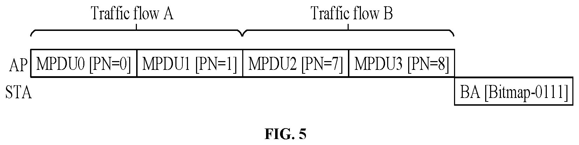

FIG. 5 is another schematic diagram of out-of-order delivery provided by an embodiment of the present application. As shown in FIG. 5, traffic A and traffic B use different PN sequences, and traffic A and traffic B use different replay counters. The AP transmits MPDU0 [PN =0], MPDU1 [PN =1], MPDU2 [PN =7], and MPDU3 [PN =8] to the STA, and the acknowledgement bitmap included in the BA frame fed back by the STA to the AP is Bitmap =0111, and the acknowledgement bitmap indicates that MPDU0 is not received. However, the STA may still transmit MPDU2 and MPDU3 to the upper layer.

WiFi MACs are typically designed to provide in-order data transmission to the upper layer, i.e. packets are transmitted in increasing sequence numbers. In the reordering buffer at the receiving end, as long as there is a "hole" in front of the received data packet (that is, the unreceived data packet with the preceding sequence number), the received data packet remains in the reordering buffer and is not forwarded to the upper layer.

Therefore, the restriction of in-order transmission also causes the head of line blocking problem: packets stored in the reordering buffer will not be forwarded if there are holes (i.e., there are unreceived packets with the preceding sequence number); and the originator needs to send a packet with a lower sequence number (SN) before sending a packet with a higher SN. Therefore, data packets with low latency transmission requirements can't be transmitted quickly due to head of line blocking, resulting in the transmission of data packets failing to meet QoS requirements.

In the scheme proposed in the embodiment corresponding to FIG. 4, low-latency data packets and non-low-latency data packets are not distinguished, and the head of line blocking problem of low-latency data packets cannot be fundamentally solved.

In the scheme proposed in the embodiment corresponding to FIG. 5, the problem of how to perform SN processing and SN reordering on low-latency data packets and non-low-latency data packets is not solved, and meanwhile, there is no specific method for distinguishing low-latency data packets and allocating PN sequences.

In the embodiments of the present application, the mechanism of sending data units in-order adopted by the WiFi MAC layer will lead to a head of line blocking problem, which is not conducive to the repaid transmission of data units with low delay transmission requirements. The present application proposes a data unit communication method based on in-order/out-of-order processing, which mainly includes the following aspects.
1) Method for indicating differentiated transmission of data units: flagging data units corresponding to different traffic flows or different transmission latency requirements (or transmission urgency degrees) or other QoS requirements of a specific TID to distinguish data units of different traffic flows or different transmission latency requirements or different QoS requirements.
2) SN allocation and processing mechanism for distinguishing QoS transmission requirements: the sending end can allocate SN counters or SN sequences according to <recipient address, specific TID (such as TID i), traffic flag/data unit flag>, and the receiving end can process data units with different traffic flags/data unit flags of the specific TID, including a mechanism of reordering processing and transmitting data units to an upper layer.
3) PN allocation and processing mechanism for distinguishing QoS transmission requirements: the sending end can allocate PN counters or PN sequences according to <originator address, recipient address, TID i/corresponding priority, traffic flag/data unit flag>, and the receiving end processes data units with different traffic flags/data unit flags of a specific TID.

It should be noted that, in any embodiment of the present application, the first device may include or be replaced by one of the following: a sending device, an originator, a sending end device, a sender, a sender device, a first MAC layer, a first MAC layer entity, a first STA, a first MLD, a first terminal device, and the like. In any embodiment of the present application, the second device may include or be replaced by one of the following: a receiving device, a recipient, a receiving end device, a receiver, a receiver device, a second MAC layer, a second MAC layer entity, a second STA, a second MLD, a second terminal device, and the like.

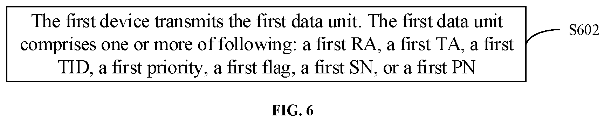

Fig. 6 is a schematic diagram of flow chart of a communication method provided by an embodiment of the present application. As shown in Fig. 6, the method includes S602.

In S602, the first device transmits the first data unit. The first data unit comprises one or more of following: a first receiver address (RA), a first transmitter address (TA), a first traffic identifier (TID), a first priority, a first flag, a first sequence number (SN), or a first packet number (PN).

The first SN and/or the first PN are determined according to one or more of the following: the first RA, the first TA, the first TID, the first priority, the first flag, whether out-of-order transmission is performed, or an out-of-order transmission mode.

Alternatively, any data unit mentioned in the embodiments of the present application (for example, any one or more of the first data unit to the ninth data unit) may include one of the following or be replaced with at least one of the following: a data frame, a data packet, QoS data, an MPDU, an MSDU, MSDUs, an A-MSDU, A-MSDUs, or an MMPDU. For example, the first data unit may include or be replaced with one of the following: a first data frame, a first data packet, first QoS data, a first MPDU, first MSDUs, a first MSDU, a first A-MSDU, first A-MSDUs, or a first MMPDU.

Alternatively, the first device may transmit one or more data units. The one or more data units may include the first data unit. Alternatively, multiple data units may be transmitted on one link or multiple links. Alternatively, multiple data units may be transmitted over one frequency band or multiple frequency bands. Alternatively, multiple data units may be transmitted on one channel or multiple channels. Alternatively, multiple data units may be transmitted in-order or may be transmitted out-of-order. For example, multiple data units may be transmitted according to the order of SNs, the order of generating SNs, the order of filling SNs, the order of assigning SNs, or the order of generating data units, or may be transmitted not according to the order of SNs, the order of generating SNs, the order of filling SNs, the order of assigning SNs, or the order of generating data units. For example, multiple data units may be transmitted according to the order of PNs, the order of generating PNs, the order of filling PNs, the order of assigning PNs, or the order of generating data units, or may be transmitted not according to the order of PNs, the order of generating PNs, the order of filling PNs, the order of assigning PNs, or the order of generating data units. For example, a data unit corresponding to SN =2 may be transmitted first, and then a data unit corresponding to SN =1 may be transmitted. For example, a data unit corresponding to PN =3 may be transmitted first, and then a data unit corresponding to PN =1 may be transmitted.

Alternatively, in any one embodiment of the present application, any one RA may comprise an MAC address. Alternatively, in any one embodiment of the present application, any one TA may comprise an MAC address.

Alternatively, RAs comprised by different data units of multiple data units may be the same. Alternatively, among multiple data units, there exist different data units comprise different RAs. Alternatively, TAs comprised by different data units of multiple data units may be the same. Alternatively, among multiple data units, there exist different data units comprise different TAs. Alternatively, TIDs comprised by different data units of multiple data units may be the same. Alternatively, among multiple data units, there exist different data units comprise different TIDs. Alternatively, different TIDs correspond to different priorities. Alternatively, flags comprised by different data units of multiple data units may be the same. Alternatively, among multiple data units, there exist different data units comprise different flags.

Alternatively, different TIDs correspond to different traffic flows, different transmission latencies, different transmission urgency degrees or other QoS requirements. Alternatively, the first TID may be comprised in a plurality of TIDs, which may be specified in a protocol. Generally, the value range of this field is 0 ~ 7.

Alternatively, the first SN may be determined according to the first RA and the first TID (the first TID may be replaced with the first priority).

Alternatively, the first SN may be determined according to the first RA, the first TID (the first TID may be replaced with the first priority), and the first flag.

Alternatively, the first SN may be determined according to the first RA, the first TID (the first TID may be replaced with the first priority), and whether out-of-order transmission is performed.

Alternatively, the first SN may be determined according to the first RA, the first TID (the first TID may be replaced with the first priority), the first flag, and whether out-of-order transmission is performed.

Alternatively, the first SN may be determined according to the first RA, the first TID (the first TID may be replaced with the first priority), and the out-of-order transmission mode.

Alternatively, the first SN may be determined according to the first RA, the first TID (the first TID may be replaced with the first priority), the first flag, and the out-of-order transmission mode.

Alternatively, the first PN may be determined according to the first TA, the first RA, and the first TID (the first TID may be replaced with the first priority).

Alternatively, the first PN may be determined according to the first TA, the first RA, the first TID (the first TID may be replaced with the first priority), and the first flag.

Alternatively, the first PN may be determined based on the first TA, the first RA, the first TID (the first TID may be replaced with the first priority), and whether out-of-order transmission is performed.

Alternatively, the first PN may be determined based on the first TA, the first RA, the first TID (the first TID may be replaced with the first priority), the first flag, and whether out-of-order transmission is performed.

Alternatively, the first PN may be determined according to the first TA, the first RA, the first TID (the first TID may be replaced with the first priority), and the out-of-order transmission mode.

Alternatively, the first PN may be determined according to the first TA, the first RA, the first TID (the first TID may be replaced with the first priority), the first flag, and the out-of-order transmission mode.

Alternatively, in any one embodiment of the present application, RA may be an address 1, and TA may be an address 2.

The out-of-order transmission mentioned herein may mean that there may be a difference between the time sequence in which the sending end sends data units at the MAC SAP and the time sequence in which the receiving end receives data units at the MAC SAP. For example, if the sending end sequentially sends the data unit 0 and the data unit 1 at the MAC SAP, and the receiving end sequentially receives the data unit 1 and the data unit 0 at the MAC SAP, the transmission of the data unit 0 and the data unit 1 can be regarded as out-of-order transmission because the receiving end first receives the data unit 1 of a later sending order, and then receives the data unit 0 of an earlier sending order.

Alternatively, whether out-of-order transmission is performed may include whether the data units are transmitted out-of-order, or may include whether one or more data units are transmitted out-of-order. The one or more data units comprise the first data unit.

Alternatively, the first SN determines according to or not according to whether out-of-order transmission is performed, and/or the first PN may be determined according to or not according to whether out-of-order transmission is performed. For example, the first SN and the first PN are both determined according to whether out-of-order transmission is performed. For another example, neither the first SN nor the first PN is determined according to whether out-of-order transmission is performed. For another example, one of the first SN and the first PN is determined according to whether out-of-order transmission is performed, and the other is not determined according to whether out-of-order transmission is performed.

Alternatively, the first SN and/or the first PN are determined according to the data unit being transmitted in-order (also referred to as non-out-of-order transmission).

Alternatively, the first SN and/or the first PN are determined according to the data unit being transmitted out-of-order.

Alternatively, in some embodiments, the in-order transmission may include transmission in an order of SNs, an order of generating SNs, an order of filling SNs, an order of assigning SNs, or an order of generating data units. In some embodiments, the in-order transmission may include transmission in an order of PNs, an order of generating PNs, an order of filling PNs, an order of assigning PNs, or an order of generating data units. Alternatively, in some embodiments, out-of-order transmission means that transmission is not in the order of SNs, the order of generating SNs, the order of filling SNs, the order of assigning SNs, or the order of generating data units. In some embodiments, out-of-order transmission means that transmission is not in the order of PNs, the order of generating PNs, the order of filling PNs, the order of assigning PNs, or the order of generating data units.

Alternatively, the first SN corresponding to in-order transmission may be different from the first SN corresponding to out-of-order transmission. Alternatively, the first PN corresponding to in-order transmission may be different from the first PN corresponding to out-of-order transmission. Alternatively, the first SN corresponding to in-order transmission may be the same as the first SN corresponding to out-of-order transmission. Alternatively, the first PN corresponding to in-order transmission may be the same as the first PN corresponding to out-of-order transmission.

Alternatively, the order of the SNs included in the plurality of data units in in-order transmission is the same as or different from the order of the SNs included in the plurality of data units in out-of-order transmission. Alternatively, the order of the PNs included in the plurality of data units in in-order transmission is the same as or different from the order of the PNs included in the plurality of data units in out-of-order transmission.

Alternatively, the SN counter/SN sequence/SN space corresponding to in-order transmission may be the same as the SN counter/SN sequence/SN space corresponding to sequential transmission. Alternatively, the SN counter/SN sequence/SN space corresponding to in-order transmission may be different from the SN counter/SN sequence/SN space corresponding to sequential transmission.

Alternatively, the PN counter/PN sequence/PN space corresponding to in-order transmission may be the same as the PN counter/PN sequence/PN space corresponding to sequential transmission. Alternatively, the PN counter/PN sequence/PN space corresponding to in-order transmission may be different from the PN counter/PN sequence/PN space corresponding to sequential transmission.

Alternatively, whether out-of-order transmission is performed and/or the out-of-order transmission mode may be specified the protocol, or may be predefined by the first device, or may be configured by the second device to the first device.

Alternatively, in the in-order transmission, the SN(s) and/or PN(s) of the one or more data units may be determined not according to the priority corresponding to the TID/TID, and/or not according to the emergency corresponding to the flag/flag. The one or more data units are transmitted according to an order of SN(s) and/or PN(s). For example, the SN(s) and/or PN(s) of one or more data units may not be determined according to the priority corresponding to TID/TID, and not be determined according to the urgency situation corresponding to the flag/flag.

Alternatively, in in-order transmission, the SN(s) and/or PN(s) of the one or more data units may be determined according to the priority corresponding to the TID/TID, and/or according to the urgency situation corresponding to the flag/flag, and the one or more data units may be transmitted according to the order of the SN(s) and/or PN(s). For example, the SN(s) and/or PN(s) of one or more data units may be determined according to the priority corresponding to the TID/TID and according to the urgency situation corresponding to the flag/flag. For example, the SN(s) and/or PN(s) of one or more data units may be determined according to the priority corresponding to the TID/TID. For example, the SN(s) and/or PN(s) of one or more data units may be determined according to the urgency situation corresponding to the flag/flag.

Alternatively, the higher the priority corresponding to the TID/TID of a data unit is, the earlier the SN and/or PN order of the data unit is. Conversely, the lower the priority corresponding to the TID/TID of a data unit is, the later the SN and/or PN order of the data unit is. Alternatively, the more urgent the urgency situation corresponding to the flag/flag of a data unit is, the earlier the SN and/or PN order of the data unit is. Conversely, the less urgent the urgency situation corresponding to the flag/flag of a data unit is, the later the SN and/or PN order of the data unit is. Alternatively, for the corresponding at least one data unit of a certain TID, if the urgency situation corresponding to the included flag/flag is more urgent, the order of the SN and/or PN of the more urgent data unit in the at least one data unit is earlier, otherwise, it is later.

Alternatively, in out-of-order transmission, the SN(s) and/or PN(s) of one or more data units may be determined according to/not according to the priority corresponding to the TID/TID, and/or, according to/not according to the urgency situation corresponding to the flag/flag. The one or more data units may not be transmitted according to the order of the SN and/or PN. For example, in out-of-order transmission, the SN and/or PN of one or more data units may not be determined according to the priority corresponding to the TID/TID, and may not be determined according to the urgency situation of the flag/flag. For example, in out-of-order transmission, the SN and/or PN of one or more data units may be determined according to the priority corresponding to the TID/TID. For example, in out-of-order transmission, the SN and/or PN of one or more data units may be determined according to the urgency situation corresponding to the flag/flag. For example, in out-of-order transmission, the SN and/or PN of one or more data units may be determined according to the priority corresponding to the TID/TID, and according to the urgency situation corresponding to the flag/flag.

Alternatively, the out-of-order transmission mode may include: (one or more) data unit(s) corresponding to the first RA and/or the first TID, or QoS data corresponding to the first RA and/or the first TID, adopts the same SN space (or sequence) and/or the same PN space (or sequence). Alternatively, in this situation, the PN is detected using a PN window.

Alternatively, the out-of-order transmission mode may include: (one or more) data unit(s) corresponding to the first RA and/or the first TID, or QoS data corresponding to the first RA and/or the first TID, adopts different SN spaces (or sequences) and/or different PN spaces (or sequences). Alternatively, in this situation, the PN may be detected using a PN window, or the PN may be detected not using a PN window. Alternatively, regarding the PN is detected not using a PN window, for example, the PN may be detected by using a PN replay counter.

Alternatively, in different out-of-order transmission modes, the orders of SNs included in the plurality of data units may be the same or different. Alternatively, in different out-of-order transmission modes, the orders of PNs included in the plurality of data units may be the same or different.

Alternatively, the SN counters/SN sequences/SN spaces corresponding to different out-of-order transmission modes may be the same. Alternatively, the SN counters/SN sequences/SN spaces corresponding to different out-of-order transmission modes may be different.

Alternatively, the PN counters/PN sequences/PN spaces corresponding to different out-of-order transmission modes may be the same. Alternatively, the PN counters/PN sequences/PN spaces corresponding to different out-of-order transmission modes may be different.

Alternatively, (one or more) data unit(s) corresponding to the first RA and/or the first TID, or the QoS data corresponding to the first RA and/or the first TID may be uplink data, or may be downlink data, or may be uplink data and downlink data.

Through the above technical solutions, since the first data unit transmitted by the first device includes the first TID, and different TIDs correspond to different traffic flows or different transmission latencies or different transmission urgency degrees or different QoS requirements, the data unit(s) is identified by the first TID, so that when the transmission priority corresponding to the first TID is high, the data unit(s) corresponding to the first TID can be transmitted first, and the transmission of the data unit(s) can meet the QoS requirements thereof, thereby improving the transmission efficiency of the data unit(s). In addition, since the first SN and/or the first PN are determined according to one or more of the following: the first RA, the first TA, the first TID, the first priority, the first flag, whether out-of-order transmission is performed, or an out-of-order transmission mode, the SN and/or the PN in each data unit can be determined according to the transmission information of the data unit, and each data unit can be transmitted according to the determined SN and/or the PN in each data unit, thereby improving the reliability of data unit transmission.

In some embodiments, the first flag is used to indicate that the transmission of the first data unit is urgent transmission, or to indicate that the transmission of the first data unit is non-urgent transmission, or to indicate a first urgency degree or a first latency requirement of transmitting the first data unit.

Alternatively, in any one embodiment of the present application, the flag may include or be replaced with: a data unit flag, a traffic flag, or other contents, and the specific description of the flag in the embodiments of the present application is not limited, for example, other contents may also be indication, urgency indication, specific indication, or the like.

For example, the first flag is used to indicate that the transmission of the first data unit is urgent transmission. For another example, the first flag is used to indicate that the transmission of the first data unit is non-urgent transmission. For another example, the first flag is used to indicate a first urgency degree of transmitting the first data unit. For another example, the first flag is used to indicate a first latency requirement of transmitting the first data unit.

Alternatively, in any one embodiment of the present application, the urgency degree may be replaced by one of the following: urgent level, urgent information, emergency degree, emergency level, emergency information, tension length, tension level, tension information, urgency requirement, urgent corresponding value, non-urgent degree, and the like.

Alternatively, in any one embodiment of the present application, the latency requirement may be replaced by one of the following: latency value, whether the latency is low, whether the latency is high, latency information, latency length, sending/transmission latency, sending/transmission latency requirement, and the like.

Alternatively, in any one embodiment of the present application, urgent transmission may be replaced with urgent sending, and non-urgent transmission may be replaced with non-urgent sending.

Alternatively, each of the one or more data units may include a flag. For example, the one or more data units comprise a first data unit and a second data unit, the first data unit comprises a first flag and the second data unit comprising a second flag. Alternatively, each of a part of the plurality of data units may comprise RA, TA, TID, SN, PN, and flag, and each of the other part of the plurality of data units may comprise RA, TA, TID, SN, and PN, but not comprise the flag. For example, the one or more data units comprise a first data unit and a third data unit, the first data unit comprises a first flag, and the third data unit does not comprise a flag.

Alternatively, multiple flags comprised by different data units of multiple data units may be the same. Alternatively, among multiple data units, there exist different data units comprise different flags. For example, multiple data units comprise a first data unit and a second data unit. The second data unit comprises one or more of following: the first RA, the first TA, the first TID, the first priority, a second flag, a second SN, or a second PN. Alternatively, the first flag and the second flag may be the same or different.

Alternatively, two different flags, one of which may be used to indicate that the transmission of the data unit is urgent transmission, and the other may be used to indicate that the transmission of the data unit is non-urgent transmission. Alternatively, different flags correspond to different urgency degrees or different latency requirements. Alternatively, different flags correspond to different values.

Alternatively, if a data unit does not comprise a flag, it is indicated that the transmission of the data unit is non-urgent transmission. In other embodiments, if a data unit does not comprise a flag, it is indicated that the transmission of the data unit is urgent transmission. In some embodiments, if a data unit does not comprise a flag, it is indicated that the transmission of the data unit is urgent transmission and the urgency degree is the highest.

Alternatively, the value of the first flag may be a first value or a second value. Alternatively, the first value is used to indicate that the transmission of the first data unit is urgent transmission, and the second numerical value is used to indicate that the transmission of the first data unit is non-urgent transmission. For example, the first value may be 1 and the second value may be 0. For another example, the first value may be 0, and the second value may be 1.

Alternatively, the value of the first flag may be any one of a plurality of values, and different values among the plurality of values correspond to different urgency degrees or different latency requirements. Exemplarily, the plurality of values may be 0-3, or 0-7, or 0-15, or 0-1, or the like, and the present application is not limited thereto.

Alternatively, the data unit having the lowest urgency degree or the highest latency requirement may be a data unit of non-urgent transmission. Alternatively, the data unit having the lowest urgency degree or the highest latency requirement may be a data unit of urgent transmission.

In the embodiment of the present application, since the first data unit transmitted by the first device further comprises a first flag, and the first flag is used to indicate that the transmission of the first data unit is urgent transmission, or to indicate that the transmission of the first data unit is non-urgent transmission, or to indicate the first urgency degree or the first latency requirement of transmitting the first data unit, so that the urgency degree of transmitting the data unit can be flagged by the first flag, and at least some data units among one or more data units corresponding to the same TID can be flagged with urgent flag, so that the data unit including the urgent flag can be transmitted in priority, which is beneficial to the fast transmission of the low-delay data unit and improves the transmission efficiency of the data unit.

An allocation method of an SN counter or an SN sequence or the first SN will be described below:
In some embodiments, the method further comprises: the first device allocates SN counter(s) or SN sequence(s), and/or determines the first SN, according to one or more of following: the first RA, the first TID, or the first flag.

Alternatively, the SN comprised in one data unit may be generated by an SN counter or may belong to one of the SN sequence.

Alternatively, the first device may allocate SN counter(s) or SN sequence(s), and/or determine the first SN, according to the first RA, the first TID, and the first flag.

Alternatively, the first device may allocate SN counter(s) or SN sequence(s), and/or determine the first SN, according to the first RA and the first TID.

Alternatively, the first device may allocate SN counter(s) or SN sequence(s), and/or determine the first SN, according to the first RA and the first flag.

Alternatively, the first device may allocate SN counter(s) or SN sequence(s), and/or determine the first SN, according to the first TID and the first flag.

For example, the first RA and/or the first TID correspond to at least one data unit. The at least one data unit comprises (one or more) data unit(s) indicating urgent transmission and (one or more) data unit(s) indicating non-urgent transmission, then the corresponding counters may be two, one SN counter corresponding to data unit(s) indicating urgent transmission and the other SN counter corresponding to data unit(s) indicating non-urgent transmission. Alternatively, the corresponding SN sequences are two groups, one group of SN sequences corresponds to data unit(s) indicating urgent transmission, and the other group of SN sequences corresponds to data unit(s) indicating non-urgent transmission. Alternatively, the first SN may be allocated according to the SN counter for data unit(s) corresponding to urgent transmission, or the first SN may be allocated according to the SN counter for data unit(s) corresponding to non-urgent transmission.

Alternatively, in any one embodiment of the present application, each value in a group of SN sequences may be determined according to a corresponding SN counter.

For another example, the first RA and/or the first TID correspond to at least one data unit. The at least one data unit comprise (one or more) data unit(s) of a first urgency degree or a first latency requirement, (one or more) data unit(s) of a second urgency degree or a second latency requirement, and (one or more) data unit(s) of a third urgency degree or a third latency requirement, then the corresponding counters may be three, one SN counter corresponds to data unit(s) indicating a first urgency degree or a first latency requirement, another SN counter corresponds to data unit(s) indicating a second urgency degree or a second latency requirement, and yet another SN counter corresponds to data unit(s) indicating a third urgency degree or a third latency requirement. Alternatively, the corresponding SN sequences are three groups, one group of SN sequences correspond to data unit(s) indicating a first urgency degree or a first latency requirement, another group of SN sequences correspond to data unit(s) indicating a second urgency degree or a second latency requirement, and yet another group of SN sequences correspond to data unit(s) indicating a third urgency degree or a third latency requirement. Alternatively, the first SN may be allocated according to an SN counter for data unit(s) corresponding to the first urgency degree or the first latency requirement.

For another example, the first RA and/or the first TID correspond to at least one data unit. The at least one data unit comprises (one or more) data unit(s) indicating urgent transmission and (one or more) data unit(s) indicating non-urgent transmission, or the at least one data unit comprises (one or more) data unit(s) of a first urgency degree or a first latency requirement, (one or more) data unit(s) of a second urgency degree or a second latency requirement, and (one or more) data unit(s) of a third urgency degree or a third latency requirement, but the corresponding SN counter is still one. The one SN counter corresponds to data unit(s) indicating urgent transmission and data unit(s) indicating non-urgent transmission, or the one SN counter corresponding to data units of various different urgency degrees or various different latency requirements, or the corresponding SN sequences is still one group, the one group of SN sequences corresponding to data unit(s) indicating urgent transmission and data unit(s) indicating non-urgent transmission, or the one group of SN sequences corresponding to data units of various different urgency degrees or various different latency requirements.

In some embodiments, the operation that the first device allocates SN counter(s) or SN sequence(s), and/or determines the first SN, according to one or more of following: the first RA, the first TID, and/or the first flag comprises: in a case where a recipient comprises a receiving STA that is non-MLD, the first device allocates SN counter(s) or SN sequence(s), and/or determines the first SN, according to one or more of following: the first RA of the receiving STA, the first TID, or the first flag.

In this situation, in a case where the recipient comprises a receiving STA that is not an MLD, the corresponding first RA is the first RA of the receiving STA.

In some embodiments, the operation that the first device allocates SN counter(s) or SN sequence(s), and/or determines the first SN, according to one or more of following: the first RA, the first TID, and/or the first flag comprises: in a case where the recipient comprises a receiving MLD, the first device allocates SN counter(s) or SN sequence(s), and/or determines the first SN, according to one or more of following: a media access control (MAC) address of a receiving MLD to which a receiving STA identified by the first RA is affiliated, the first TID, or the first flag.

In this situation, in a case where the recipient comprises a receiving MLD, the corresponding first RA is the MAC address of a receiving MLD to which a receiving STA identified by the first RA is affiliated.

Alternatively, the recipient may correspond to the first RA. Alternatively, the recipient may be a second device.

Alternatively, the first device (also referred to as the originator) may include a STA that is not MLD, or the first device may include an MLD.

Alternatively, the originator includes a non-MLD STA and the recipient includes a non-MLD STA. Alternatively, the originator includes a non-MLD STA and the recipient includes an MLD. Alternatively, the originator includes an MLD and the recipient includes an MLD. Alternatively, the originator includes an MLD and the recipient includes a non-MLD STA.

In some embodiments, quality of service (QoS) data corresponding to the first RA and/or the first TID adopts one or more of following: one or more SN spaces, one or more SN counters, or one or more SN sequences.

Alternatively, the QoS data corresponding to the first RA and/or the first TID may comprise: QoS data corresponding to the first RA and the first TID, or QoS data corresponding to the first RA, or QoS data corresponding to the first TID. Alternatively, the QoS data corresponding to the first RA and/or the first TID may comprise one or more data units, and the one or more data units may include the first data unit.

Alternatively, the SN space adopted by the data unit(s) indicating urgent transmission is different from the SN space adopted by the data unit(s) indicating non-urgent transmission. Alternatively, data units indicate different urgency degrees or different latency requirements adopt different SN spaces.

Alternatively, the SN space adopted by the data unit(s) indicating urgent transmission is the same as the SN space adopted by the data unit(s) indicating non-urgent transmission. Alternatively, the data units indicating different urgency degrees or different latency requirements adopt the same SN space.

Alternatively, the SN counter adopted by the data unit(s) indicating urgent transmission is different from the SN counter adopted by the data unit(s) indicating non-urgent transmission. Alternatively, the data unit(s) indicating different urgency degrees or different latency requirements adopts different SN counters.

Alternatively, the SN counter used by the data unit(s) indicating urgent transmission is the same as the SN counter used by the data unit(s) indicating non-urgent transmission. Alternatively, the data units indicating different urgency degrees or different latency requirements adopt the same SN counter.

Alternatively, one SN space may comprise one or more SN counters. Alternatively, different SN spaces corresponding to different SN counters.

In some implementations, the first device allocates SN counter(s) or SN sequence(s), and/or determines the first SN according to one or more of following: the first RA, the first TID, the first flag. Correspondingly, the QoS data corresponding to the first RA and/or the first TID adopts one or more of the following: one or more SN spaces, one or more SN counters, and one or more SN sequences. For example, the first device allocates SN counter(s) or SN sequence(s), and/or determines the first SN according to the first RA, the first TID, and the first flag. Correspondingly, QoS data corresponding to the first RA and/or the first TID adopts one or more of the following: a plurality of SN spaces, a plurality of SN counters, and a plurality of SN sequences. For another example, the first device allocates SN counter(s) or SN sequence(s), and/or determines the first SN according to the first RA, the first TID, and the first flag. Correspondingly, QoS data corresponding to the first RA and/or the first TID adopts one or more of the following: one SN space, one SN counter, and one SN sequence.

Another allocation method of SN counter(s) or SN sequence(s) or the first SN is described below.

In some embodiments, the method further comprises the following operation.

The first device allocates SN counter(s) or SN sequence(s), and/or determines the first SN, according to the first RA and the first TID.

Alternatively, in a case where the first data unit does not include the first flag, the first device may allocate SN counter(s) or SN sequence(s), and/or determine the first SN, according to the first RA and the first TID.

Alternatively, in the case where the first data unit comprises the first flag, the first device may still allocate SN counter(s) or SN sequence(s), and/or determine the first SN, according to the first RA and the first TID.

For example, the first RA and/or the first TID correspond to at least one data unit. The at least one data unit comprises (one ore more) data unit(s) indicating urgent transmission, and comprises (one or more) data unit(s) indicating non-urgent transmission. One corresponding SN counter or a group of SN sequences, not only corresponds to data unit(s) indicating urgent transmission, but also corresponds to data unit(s) indicating non-urgent transmission; and/or the first SN may be allocated according to the one SN counter.

For another example, the first RA and/or the first TID correspond to at least one data unit. The at least one data unit comprises (one or more) data unit(s) of a first urgency degree or a first latency requirement, (one or more) data unit(s) of a second urgency degree or a second latency requirement, and (one or more) data unit(s) of a third urgency degree or a third latency requirement. One corresponding SN counter or a group of SN sequences corresponds to data unit(s) indicating a first urgency degree or a first latency, corresponding to data unit(s) of a second urgency degree or a second latency requirement, and corresponding to data unit(s) of a third urgency degree or a third latency requirement; and/or the first SN may be allocated according to the one SN counter.

In some embodiments, the operation that the first device allocates SN counter(s) or SN sequence(s), and/or determines the first SN, according to the first RA and the first TID comprises: in a case where a recipient comprises a receiving STA that is non-MLD, the first device allocates SN counter(s) or SN sequence(s), and/or determines the first SN, according to the first TID and the first RA of the receiving STA

In this situation, in a case where the recipient comprises a receiving STA that is not an MLD, the corresponding first RA is the first RA of the receiving STA.

In some embodiments, the operation that the first device allocates SN counter(s) or SN sequence(s), and/or determines the first SN, according to the first RA and the first TID comprises: in a case where a recipient comprises a receiving MLD, the first device allocates SN counter(s) or SN sequence(s), and/or determines the first SN, according to an MAC address of a receiving MLD to which a receiving STA identified by the first RA is affiliated and the first TID.

In this situation, in a case where the recipient comprises a receiving MLD, the corresponding first RA is the MAC address of a receiving MLD to which a receiving STA identified by the first RA is affiliated.

In some embodiments, the QoS data corresponding to the first RA and/or the first TID adopts one or more of the following: one SN space, one SN counter, and one SN sequence.

Alternatively, the SN space adopted by the data unit(s) indicating urgent transmission is the same as the SN space adopted by the data unit(s) indicating non-urgent transmission. Alternatively, the data units indicating different urgency degrees or different latency requirements adopt the same SN space.

Alternatively, the SN counter adopted by the data unit(s) indicating urgent transmission is the same as the SN counter adopted by the data unit(s) indicating non-urgent transmission. Alternatively, the data units indicating different urgency degrees or different latency requirements adopt the same SN counter.

In some embodiments, the first device allocates SN counter(s) or SN sequence(s), and/or determines the first SN according to the first RA and the first TID. Correspondingly, QoS data corresponding to the first RA and/or the first TID adopts one or more of the following: one SN space, one SN counter, and one SN sequence.

An allocation method of PN counter(s) or PN sequence(s) or the first PN will be described below.

In some embodiments, the method further comprises: the first device allocates PN counter(s) or PN sequence(s), and/or determines the first PN, according to one or more of following: the first TA, the first RA, the first TID, the first priority, or the first flag.

Alternatively, the PN comprised in one data unit may be generated by an PN counter or may belong to one of the PN sequence.

Alternatively, the first device allocates PN counter(s) or PN sequence(s), and/or determines the first PN, according to the following four items: the first item is a first TA, the second item is a first RA, the third item is a first TID or a first priority, and the fourth item is the first flag.

Alternatively, the first device allocates PN counter(s) or PN sequence(s), and/or determines the first PN, according to the following three items: the first item is a first TA, the second item is a first RA, and the third item is a first TID or a first priority.

Alternatively, the first device allocates PN counter(s) or PN sequence(s), and/or determines the first PN, according to the following three items: the first item is a first TA, the second item is a first RA, and the third item is a first flag.

For example, the first TA, the first RA and the first TID correspond to at least one data unit. The at least one data unit comprises (one or more) data unit(s) indicating urgent transmission and (one or more) data unit(s) indicating non-urgent transmission, then the corresponding counters may be two, one PN counter corresponding to data unit(s) indicating urgent transmission and the other PN counter corresponding to data unit(s) indicating non-urgent transmission. Alternatively, the corresponding PN sequences are two groups, one group of PN sequences corresponds to data unit(s) indicating urgent transmission, and the other group of PN sequences corresponds to data unit(s) indicating non-urgent transmission. Alternatively, the first PN may be allocated according to the PN counter for data unit(s) corresponding to urgent transmission, or the first PN may be allocated according to the PN counter for data unit(s) corresponding to non-urgent transmission.

Alternatively, in any one embodiment of the present application, each value in a group of PN sequences may be determined according to a corresponding PN counter.

For another example, the first TA, the first RA and the first TID correspond to at least one data unit. The at least one data unit comprise (one or more) data unit(s) of a first urgency degree or a first latency requirement, (one or more) data unit(s) of a second urgency degree or a second latency requirement, and (one or more) data unit(s) of a third urgency degree or a third latency requirement, then the corresponding counters may be three, one PN counter corresponds to data unit(s) indicating a first urgency degree or a first latency requirement, another PN counter corresponds to data unit(s) indicating a second urgency degree or a second latency requirement, and yet another PN counter corresponds to data unit(s) indicating a third urgency degree or a third latency requirement. Alternatively, the corresponding PN sequences are three groups, one group of PN sequences correspond to data unit(s) indicating a first urgency degree or a first latency requirement, another group of PN sequences correspond to data unit(s) indicating a second urgency degree or a second latency requirement, and yet another group of PN sequences correspond to data unit(s) indicating a third urgency degree or a third latency requirement. Alternatively, the first PN may be allocated according to an PN counter for data unit(s) corresponding to the first urgency degree or the first latency requirement.

For another example, the first TA, the first RA and the first TID correspond to at least one data unit. The at least one data unit comprises (one or more) data unit(s) indicating urgent transmission and (one or more) data unit(s) indicating non-urgent transmission, or the at least one data unit comprises (one or more) data unit(s) of a first urgency degree or a first latency requirement, (one or more) data unit(s) of a second urgency degree or a second latency requirement, and (one or more) data unit(s) of a third urgency degree or a third latency requirement, but the corresponding PN counter is still one. The one PN counter corresponds to data unit(s) indicating urgent transmission and data unit(s) indicating non-urgent transmission, or the one PN counter corresponding to data units of various different urgency degrees or various different latency requirements, or the corresponding PN sequences is still one group, the one group of PN sequences corresponding to data unit(s) indicating urgent transmission and data unit(s) indicating non-urgent transmission, or the one group of PN sequences corresponding to data units of various different urgency degrees or various different latency requirements.

In some embodiments, the operation that the first device allocates PN counter(s) or PN sequence(s), and/or determines the first PN, according to one or more of following: the first TA, the first RA, the first TID, the first priority, or the first flag comprises: in a case where a recipient comprises a receiving STA that is non-MLD, the first device allocates PN counter(s) or PN sequence(s), and/or determines the first PN, according to one or more of following: the first RA, the first RA of the receiving STA, the first TID, the first priority, or the first flag.

In this situation, in a case where the recipient comprises a receiving STA that is not an MLD, the corresponding first RA is the first RA of the receiving STA.

In some embodiments, the operation that the first device allocates PN counter(s) or PN sequence(s), and/or determines the first PN, according to one or more of following: the first TA, the first RA, the first TID, the first priority, or the first flag comprises: in a case where a recipient comprises a receiving MLD, the first device allocates PN counter(s) or PN sequence(s), and/or determines the first PN, according to one or more of following: an MAC address of a sending MLD to which a sending STA identified by the first TA is affiliated, an MAC address of a receiving MLD to which a receiving STA identified by the first RA is affiliated, the first TID, the first priority, or the first flag.

In this situation, in a case where the recipient comprises a receiving MLD, the corresponding first TA is the MAC address of a sending MLD to which a sending STA identified by the first TA is affiliated, and the corresponding first RA is the MAC address of a receiving MLD to which a receiving STA identified by the first RA is affiliated.

In some embodiments, QoS data corresponding to the first RA and/or the first TID adopts one or more of following: one or more PN spaces, one or more PN counters, or one or more PN sequences.

Alternatively, the QoS data corresponding to the first RA and/or the first TID may comprise one of the following: QoS data corresponding to the first RA and the first TID, QoS data corresponding to the first RA, QoS data corresponding to the first TID, the first TA, the first RA, and the QoS data corresponding to the first TID. Alternatively, the QoS data corresponding to the first RA and/or the first TID may comprise one or more data units, which may comprise the first data unit.

Alternatively, the PN space adopted by the data unit(s) indicating urgent transmission is different from the PN space adopted by the data unit(s) indicating non-urgent transmission. Alternatively, data units indicating different urgency degrees or different latency requirements adopt different PN spaces.

Alternatively, the PN space adopted by the data unit(s) indicating urgent transmission is the same as the PN space adopted by the data unit(s) indicating non-urgent transmission. Alternatively, the data units indicating different urgency degrees or different latency requirements adopt the same PN space.

Alternatively, the PN counter adopted by the data unit(s) indicating urgent transmission is different from the PN counter adopted by the data unit(s) indicating non-urgent transmission. Alternatively, the data unit(s) indicating different urgency degrees or different latency requirements adopts different PN counters.

Alternatively, the PN counter adopted by the data unit(s) indicating urgent transmission is the same as the PN counter adopted by the data unit(s) indicating non-urgent transmission. Alternatively, the data units indicating different urgency degrees or different latency requirements adopt the same PN counter.

Alternatively, one PN space may contain one or more PN counters. Alternatively, different PN spaces corresponding to different PN counters.

In some implementations, the first device allocates PN counter(s) or PN sequence(s), and/or determines the first PN according to one or more of following: the first TA, the first RA, the first TID, the first priority, or the first flag. Correspondingly, the QoS data corresponding to the first RA and/or the first TID adopts one or more of the following: one or more PN spaces, one or more PN counters, and one or more PN sequences. For example, the first device allocates PN counter(s) or PN sequence(s), and/or determines the first PN, according to the first TA, the first RA, the first TID, and the first flag. Or the first device allocates PN counter(s) or PN sequence(s), and/or determines the first PN, according to the first TA, the first RA, the first priority, and the first flag. Correspondingly, QoS data corresponding to the first RA and/or the first TID adopts one or more of the following: a plurality of PN spaces, a plurality of PN counters, and a plurality of PN sequences. For another example, the first device allocates PN counter(s) or PN sequence(s), and/or determines the first PN, according to the first TA, the first RA, the first TID, and the first flag. Or the first device allocates PN counter(s) or PN sequence(s), and/or determines the first PN, according to the first TA, the first RA, the first priority, and the first flag. Correspondingly, QoS data corresponding to the first RA and/or the first TID adopts one or more of the following: one PN space, one PN counter, and one PN sequence.

Another allocation method of PN counter(s) or PN sequence(s) or the first PN is described below.

In some embodiments, the method further comprises the following operation.

The first device allocates PN counter(s) or PN sequence(s), and/or determines the first PN, according to the first TA, the first RA, and the first TID or the first priority.

Alternatively, in a case where the first data unit does not comprise the first flag, the first device may allocate PN counter(s) or PN sequence(s), and/or determine the first PN, according to the first TA, the first RA, and the first TID or the first priority.

Alternatively, in the case where the first data unit comprises the first flag, the first device may still allocate PN counter(s) or PN sequence(s), and/or determine the first PN, according to the first TA, the first RA, and the first TID or first priority.

In this way, the first device allocates PN counter(s) or PN sequence(s) or the first PN, according to the following three items: the first item is a first TA, the second item is a first RA, and the third item is a first TID or a first priority.

For example, the first RA and/or the first TID correspond to at least one data unit. The at least one data unit comprises (one or more) data unit(s) indicating urgent transmission, and comprises (one or more) data unit(s) indicating non-urgent transmission. One corresponding PN counter or a group of PN sequences, not only corresponds to data unit(s) indicating urgent transmission, but also corresponds to data unit(s) indicating non-urgent transmission; or the first PN may be allocated according to the one PN counter.

For another example, the first RA and/or the first TID correspond to at least one data unit. The at least one data unit comprises (one or more) data unit(s) of a first urgency degree or a first latency requirement, (one or more) data unit(s) of a second urgency degree or a second latency requirement, and (one or more) data unit(s) of a third urgency degree or a third latency requirement. One corresponding PN counter or a group of PN sequences corresponds to data unit(s) indicating a first urgency degree or a first latency, corresponding to data unit(s) of a second urgency degree or a second latency requirement, and corresponding to data unit(s) of a third urgency degree or a third latency requirement; or the first PN may be allocated according to the one PN counter.

In some embodiments, the operation that the first device allocates PN counter(s) or PN sequence(s), or the first PN, according to the first TA, the first RA, and the first TID or the first priority comprises the following operation.

In a case where a recipient comprises a receiving STA that is non-MLD, the first device allocates PN counter(s) or PN sequence(s), and/or determines the first PN, according to the first TA, the first RA of the receiving STA, and the first TID or the first priority;

In this situation, in a case where the recipient comprises a receiving STA that is not an MLD, the corresponding first RA is the first RA of the receiving STA.

In some embodiments, the operation that the first device allocates PN counter(s) or PN sequence(s), or the first PN, according to the first TA, the first RA, and the first TID or the first priority comprises the following operation.

In a case where a recipient comprises a receiving MLD, the first device allocates PN counter(s) or PN sequence(s), and/or determines the first PN, according to an MAC address of a sending MLD to which a sending STA identified by the first TA is affiliated, an MAC address of a receiving MLD to which a receiving STA identified by the first RA is affiliated, and the first TID or the first priority.

In this situation, in a case where the recipient comprises a receiving MLD, the corresponding first TA is the MAC address of a sending MLD to which a sending STA identified by the first TA is affiliated, and the corresponding first RA is the MAC address of a receiving MLD to which a receiving STA identified by the first RA is affiliated.

In some embodiments, the QoS data corresponding to the first RA and/or the first TID adopts one or more of the following: one PN space, one PN counter, and one PN sequence.

Alternatively, the PN space adopted by the data unit(s) indicating urgent transmission is the same as the PN space adopted by the data unit(s) indicating non-urgent transmission. Alternatively, the data units indicating different urgency degrees or different latency requirements adopt the same PN space.

Alternatively, the PN counter adopted by the data unit(s) indicating urgent transmission is the same as the PN counter adopted by the data unit(s) indicating non-urgent transmission. Alternatively, the data units indicating different urgency degrees or different latency requirements adopt the same PN counter.

Alternatively, the PN sequence adopted by the data unit(s) indicating urgent transmission is the same as the PN sequence adopted by the data unit(s) indicating non-urgent transmission. Alternatively, the data units indicating different urgency degrees or different latency requirements adopt the same PN space.

In some embodiments, the first device allocates PN counter(s) or PN sequence(s), and/or determines the first PN according to the first RA, the first RA, and the first TID or the first priority. Correspondingly, QoS data corresponding to the first RA and/or the first TID adopts one or more of the following: one PN space, one PN counter, and one PN sequence.

In some embodiments, after the first device transmits the first data unit, the method further comprises: the first device transmits a second data unit.

In a transmission line, a position of the second data unit precedes a position of the first data unit.

The first flag is used to indicate that a transmission of the first data unit is urgent transmission, or to indicate a first urgency degree or a first latency requirement of transmitting the first data unit.

The second data unit comprises one or more of following: the first RA, the first TA, the first TID, the first priority, a second flag, a second SN, or a second PN.

The second flag is used to indicate that a transmission of a second data unit is non-urgent transmission, or to indicate a second urgency degree or a second latency requirement of transmitting the second data unit. The first urgency degree is greater than the second urgency degree, and the first latency requirement is more urgent than the second latency requirement.

Alternatively, "the first latency requirement is more urgent than the second latency requirement" may be replaced by "the first latency requirement is more stringent than the second latency requirement".

Alternatively, "the first latency requirement is more urgent than the second latency requirement" may comprise: the first data unit is transmitted with low latency, and the second data unit is transmitted with non-low latency; alternatively, the first data unit is transmitted with non-high latency, and the second data unit is transmitted with high latency; alternatively, the latency value corresponding to transmitting the first data unit is less than the latency value corresponding to transmitting the second data unit.

Exemplarily, a plurality of data units may be included in the transmission line, and the data units included in the transmission line may include one or more data units for indicating that the transmission of the data unit(s) is urgent transmission (including the first data unit, each of the one or more data units for indicating that the transmission of the data unit(s) is urgent transmission includes a first flag), and also include one or more data units for indicating that the transmission of the data unit(s) is non-urgent transmission (including the second data unit, each of the one or more data units for indicating that the transmission of the data unit(s) is non-urgent transmission includes a second flag), then the first device may first transmit one or more data units for indicating that the transmission of the data unit(s) is urgent transmission in the transmission line, and then transmit one or more data units for indicating that the transmission of the data unit(s) is non-urgent transmission. In this way, even if the position of the first data unit is after the position of the second data unit, the first data unit can be transmitted first, and then the second data unit can be transmitted.

Exemplarily, a plurality of data units may be included in the transmission line, the data units included in the transmission line may include one or more data units for indicating a first urgency degree or a first latency requirement (including a first data unit, each of the one or more data units for indicating a first urgency degree or a first latency requirement includes a first flag), and also include one or more data units for indicating a second urgency degree or a second latency requirement (including a second data unit, each of the one or more data units for indicating a second urgency degree or a second latency requirement includes a first flag), the first urgency degree is greater than the second urgency degree, the first latency requirement is more urgent than the second latency requirement, then the first device may first transmit, in the transmission line, one or more data units for indicating the first urgency degree or the first latency requirement, and then transmit the one or more data units indicating the second urgency degree or the second latency requirement. In this way, even if the position of the first data unit is after the position of the second data unit, the first data unit can be transmitted first, and then the second data unit can be transmitted.

Alternatively, the number of data units in the transmission line may be the size of a BA scoreboard or may be the size of a PN window. For example, the number of data units in the transmission line may be 64. Alternatively, the number of data units in the transmission line may be the size of a plurality of BA scoreboards or may be the size of a plurality of PN windows.

Alternatively, the data units in the transmission line may all correspond to the first RA and/or the first TID.

In some embodiments, after the first device transmits the first data unit, the method further comprises: the first device transmits a third data unit;

In the transmission line, the position of the third data unit precedes the position of the first data unit.

The first flag is used to indicate that a transmission of the first data unit is urgent transmission, or to indicate a first urgency degree or a first latency requirement of transmitting the first data unit.

The third data unit comprises one or more of the following: the first RA, the first TA, the first TID, the first priority, a third SN, and a third PN.

Exemplarily, a plurality of data units may be included in the transmission line, and the data units included in the transmission line may include one or more data units for indicating that the transmission of the data unit(s) is urgent transmission (including the first data unit, each of the one or more data units for indicating that the transmission of the data unit(s) is urgent transmission includes a first flag), and also include one or more data units not for indicating that the transmission of the data unit(s) is urgent transmission (including the third data unit, each of the one or more data units not for indicating that the transmission of the data unit(s) is urgent transmission does not include a flag, for example, not include a first flag or a second flag), then the first device may first transmit one or more data units for indicating that the transmission of the data unit(s) is urgent transmission in the transmission line, and then transmit one or more data units not for indicating that the transmission of the data unit(s) is urgent transmission. In this way, even if the position of the first data unit is after the position of the third data unit, the first data unit may be transmitted first, and then the third data unit may be transmitted.

Exemplarily, a plurality of data units may be included in the transmission line, the data units included in the transmission line may include one or more data units for indicating a first urgency degree or a first latency requirement (including the first data unit, each of the one or more data units for indicating a first urgency degree or a first latency requirement includes a first flag), and also include one or more data units not for indicating that the transmission of the data unit(s) is urgent transmission (including a third data unit, each of the one or more data units not for indicating that the transmission of the data unit(s) is urgent transmission does not include a flag, for example, not include a first flag or a second flag), then the first device may first transmit, in the transmission line, one or more data units for indicating the first urgency degree or the first latency requirement, and then transmit the one or more data units not for indicating that the transmission of the data unit(s) is urgent transmission. In this way, even if the position of the first data unit is after the position of the third data unit, the first data unit may be transmitted first, and then the third data unit may be transmitted.

In some embodiments, the first flag and/or the first TID is included in a high throughput (HT) control field of the first data unit.

In some embodiments, the HT control field corresponds to a high efficient (HE) variant. The first flag and/or the first TID are comprised in a control subfield of an A-Control subfield of the HT control field.

Alternatively, the A-Control subfield may include a differentiated transmission indication control subfield. The first flag and/or the first TID are included in the differentiated transmission indication control subfield.

Alternatively, the A-Control subfield includes a control list subfield of variable length and a padding field of variable length (which may also be 0 in length). The control list subfield includes one or more control subfields. The control subfield includes a control ID subfield and a control information subfield. The control ID subfield indicates the type of information carried in the control information subfield. The length of the control information subfield is fixed for each value of the control ID subfield.

Alternatively, the one or more control subfields may include a differentiated transmission indication control subfield. The control ID subfield value of the differentiated transmission indication control subfield may be used to indicate being an urgent transmission indication control subfield, or to indicate being a non-urgent transmission indication control subfield.

Alternatively, the differentiated transmission indication control subfield may include one or more of the following: urgent transmission indication, traffic identifier (TID), or reservation field. Alternatively, the length corresponding to the urgent transmission indication may be 0 or a variable length. The differentiated transmission indication control subfield may include one or more of the following: non-urgent transmission indication, traffic identifier (TID), or reservation field. Alternatively, the length corresponding to the urgent transmission indication/non-urgent transmission indication may be 0 or a variable length. Alternatively, the length corresponding to the TID may be 0 or a variable length. Alternatively, the length corresponding to the reservation field may be 0 or a variable length. Alternatively, the urgent transmission indication may correspond to a control ID subfield value. Alternatively, the TID may correspond to a control ID subfield.

In some embodiments, one or more of the first data unit, the second data unit, or the third data unit are included in one or more data units.

Each of the one or more data units comprises one of the following: a data frame, a data packet, QoS data, an MAC protocol data unit (MPDU), an MAC service data unit (MSDU), MSDUs, an aggregation-MSDU (A-MSDU), A-MSDUs, or a MAC management protocol data unit (MMPDU).

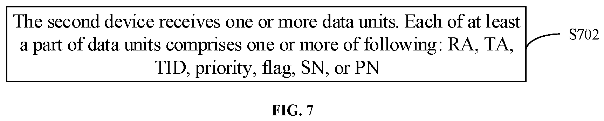

Fig. 7 is another schematic diagram of flow chart of a communication method provided by an embodiment of the present application. As shown in Fig. 7, the method includes S702.

In S702, a second device receives one or more data units. Each of at least a part of data units comprises one or more of following: transmitter address (TA), receiver address (RA), traffic identifier (TID), priority, flag, sequence number (SN), or packet number (PN).

The SN and/or PN comprised in the each data unit are determined according to one or more of following: TA, RA, TID, priority, flag, whether out-of-order transmission is performed, or out-of-order transmission mode.

Alternatively, at least a part of data units may be some or all of the one or more data units.

Alternatively, the one or more data units received by the second device may be received over one or more links. Alternatively, the one or more data units received by the second device may be received over one or more frequency bands. Alternatively, the one or more data units received by the second device may be received on one or more channels. Multiple data units received by the second device may be received in-order or out-of-order. For example, the multiple data units received by the second device may be received according to the order of SNs, or may be received not according to the order of SNs. For example, the multiple data units may be received according to the order of PNs, or may be received not according to the order of PNs. For example, a data unit corresponding to SN =2 may be received first, and then a data unit corresponding to SN =1 may be received. For example, a data unit corresponding to PN =3 may be received first, and then a data unit corresponding to PN =1 may be received.

Alternatively, RAs comprised by different data units of multiple data units may be the same. Alternatively, among multiple data units, there exist different data units comprise different RAs. Alternatively, TAs comprised by different data units of multiple data units may be the same. Alternatively, among multiple data units, there exist different data units comprise different TAs. Alternatively, TIDs comprised by different data units of multiple data units may be the same. Alternatively, among multiple data units, there exist different data units comprise different TIDs. Alternatively, different TIDs correspond to different priorities. Alternatively, multiple flags comprised by different data units of multiple data units may be the same. Alternatively, among multiple data units, there exist different data units comprise different flags.

Alternatively, the TID included in each data unit may be included in multiple TIDs. The multiple TIDs may be specified in a protocol. For example, a value range of the TID included in each data unit is 0 to 7.

Alternatively, the SN and/or PN included in each data unit are determined according to one or more of the following: TA included in each data unit, RA included in each data unit, TID included in each data unit, priority included in each data unit, flag included in each data unit, whether out-of-order transmission is performed, or out-of-order transmission mode.

Alternatively, each data unit may be replaced by a data unit i. i is any integer greater than or equal to 0.

Alternatively, the SN included in each data unit may be determined according to the RA included in each data unit and the TID included in each data unit (the TID included in each data unit may be replaced with the priority included in each data unit). For example, the SN included in the data unit i may be determined from the first RA included in the data unit i and the TID included in the data unit i.

Alternatively, the SN included in each data unit may be determined according to the RA included in each data unit, the TID included in each data unit (the TID included in each data unit may be replaced with the priority included in each data unit), and the flag included in each data unit.

Alternatively, the SN included in each data unit may be determined according to the RA included in each data unit, the TID included in each data unit (the TID included in each data unit may be replaced with the priority included in each data unit), and whether out-of-order transmission is performed.

Alternatively, the SN included in each data unit may be determined according to the RA included in each data unit, the TID included in each data unit (the TID included in each data unit may be replaced with the priority included in each data unit), the flag included in each data unit, and whether out-of-order transmission is performed.

Alternatively, the SN included in each data unit may be determined according to the RA included in each data unit, the TID included in each data unit (the TID included in each data unit may be replaced with the priority included in each data unit), and the out-of-order transmission mode.

Alternatively, the SN included in each data unit may be determined according to the RA included in each data unit, the TID included in each data unit (the TID included in each data unit may be replaced with the priority included in each data unit), the flag included in each data unit, and the out-of-order transmission mode.

Alternatively, the PN included in each data unit may be determined according to the TA included in each data unit, the RA included in each data unit, and the TID included in each data unit (the TID included in each data unit may be replaced with the priority included in each data unit).

Alternatively, the PN included in each data unit may be determined according to the TA included in each data unit, the RA included in each data unit, the TID included in each data unit (the TID included in each data unit may be replaced with the priority included in each data unit), and the flag included in each data unit.

Alternatively, the PN included in each data unit may be determined according to the TA included in each data unit, the RA included in each data unit, the TID included in each data unit (the TID included in each data unit may be replaced with the priority included in each data unit), and whether out-of-order transmission is performed.

Alternatively, the PN included in each data unit may be determined according to the TA included in each data unit, the RA included in each data unit, the TID included in each data unit (the TID included in each data unit may be replaced with the priority included in each data unit), the flag included in each data unit, and whether out-of-order transmission is performed.

Alternatively, the PN included in each data unit may be determined according to the TA included in each data unit, the RA included in each data unit, the TID included in each data unit (the TID included in each data unit may be replaced with the priority included in each data unit), and the out-of-order transmission mode.

Alternatively, the PN included in each data unit may be determined according to the TA included in each data unit, the RA included in each data unit, the TID included in each data unit (the TID included in each data unit may be replaced with the priority included in each data unit), the flag included in each data unit, and the out-of-order transmission mode.

For example, the plurality of data units includes a first data unit and a second data unit. The first data unit comprises the first TA, the first RA, the first TID, the first priority, a first flag, a first SN, and a first PN. The second data unit comprises the first TA, the first RA, the first TID, the first priority, a second flag, a second SN, and a second PN.

In some embodiments, the flag comprised in each data unit is used to indicate that the transmission of the each data unit is urgent transmission, or to indicate that the transmission of the each data unit is non-urgent transmission, or to indicate the urgency degree or latency requirement of transmitting the each data unit.

For example, the flag comprised in one unit is used to indicate that the transmission of this data unit is urgent transmission. For another example, the flag comprised in this unit is used to indicate that the transmission of this data unit is non-urgent transmission. For another example, the flag comprised in this data unit is used to indicate the urgency degree of transmitting this data unit. For another example, the flag comprised in this data unit is used to indicate the latency requirement of transmitting this data unit.

Alternatively, flags comprised by different data units of multiple data units may be the same. Alternatively, among multiple data units, there exist different data units comprise different flags.

Alternatively, the value of the flag comprised in each data unit may be a first value or a second value. Alternatively, the first value is used to indicate that the transmission of the first data unit is urgent transmission, and the second numerical value is used to indicate that the transmission of the first data unit is non-urgent transmission. For example, the first value may be 1 and the second value may be 0. For another example, the first value may be 0, and the second value may be 1.

Alternatively, the value of the flag included in each data unit may be any one of multiple values, and different values among the multiple values correspond to different urgency degrees or different latency requirements. Exemplarily, the multiple values may be 0-3, or 0-7, or 0-16, or 0-2, or the like, and the present application is not limited thereto.

One method of allocating and/or controlling reception reordering buffer(s) is described below.

In some embodiments, the method further comprises the following operation.

The second device allocates and/or controls reception reordering buffer(s) according to one or more of the following: TA, TID, or flag. The reception reordering buffer is used for reordering at least one data unit corresponding to one or more of TA, TID, or flag.

Alternatively, the second device may allocate and/or control reception reordering buffer(s) according to the TA, the TID, and the flag.

Alternatively, the second device may allocate and/or control reception reordering buffer(s) according to the TA and the TID.

Alternatively, the second device may allocate and/or control reception reordering buffer(s) according to the TA and the flag.

Alternatively, the second device may allocate and/or control reception reordering buffer(s) according to the TID and the flag.

Alternatively, the same TA, the same TID, and the same label, one reception reordering buffer is allocated and/or controlled. The one reception reordering buffer may be used to reorder at least one data unit corresponding to the same TA, the same TID, and the same flag. Alternatively, the same TA and the same TID, one reception reordering buffer is allocated and/or controlled. Alternatively, the same TA and the same flag, one reception reordering buffer is allocated and/or controlled. Alternatively, the same TID and the same flag, one reception reordering buffer is allocated and/or controlled.

Alternatively, different TAs correspond to different reception reordering buffers, and/or, different TIDs correspond to different reception reordering buffers, and/or, different flags correspond to different reception reordering buffers.

For example, if one or more data units received by the second device comprise data units 1 to 10, and each of data units 1 to 10 comprises a first TA, a first TID, and a first flag, the second device allocates and/or controls a reception reordering buffer. This reception reordering buffer is used for reordering the data units 1 to 10.

As another example, if one or more data units received by the second device comprise data units 1 to 18, each of the data units 1 to 10 comprises a first TA, a first TID, and a first flag, and each of the data units 11 to 18 comprises a first TA, a first TID, and a second flag, the second device allocates and/or controls two reception reordering buffers. One of the two reception reordering buffers is used for reordering the data units 1 to 10, and the other of the two reception reordering buffers is used for reordering the data units 11 to 18.

Alternatively, reordering the at least one data unit may comprise reordering the at least one data unit according to the order of SNs.

Alternatively, for the same TA and TID, the data unit with flag and the data unit without flag may be allocated a uniform reception reordering buffer (allocating a uniform SN sequence, although data units with flags are included). For example, the data unit with flag and the data unit without flag are both allocated a first SN sequence (corresponding to a first SN space), and are also allocated a first reception reordering buffer.

Alternatively, for the same TA and TID, data unit with flag and data unit without flag may be allocated different reception reordering buffers (different SN spaces are adopted according to the flag). For example, data unit with flag use a second SN space or a second SN sequence to allocate a second reception reordering buffer, the data unit without flag uses a third SN space or a third SN sequence to allocate a third reception reordering buffer.

In some embodiments, the method further comprises the following operation.

The second device allocates and/or controls reception reordering buffer(s) according to TA and TID. The reception reordering buffer is used for reordering at least one data unit corresponding to the TA and the TID.

Alternatively, the same TA and the same TID, one reception reordering buffer is allocated and/or controlled. The one reception reordering buffer may be used to reorder at least one data unit corresponding to the same TA and the same TID.

Alternatively, different TAs correspond to different reordering buffers, and/or different TIDs correspond to different reordering buffers. Alternatively, the reordering buffers corresponding to different flags may be the same.

For example, if one or more data units received by the second device comprise data units 1 to 18, each of the data units 1 to 10 comprises a first TA, a first TID, and a first flag, and each of the data units 11 to 18 comprises a first TA, a first TID, and a second flag, the second device allocates and/or controls one reception reordering buffer, which is used for reordering the data units 1 to 18.

As another example, if one or more data units received by the second device comprise data units 1 to 20, each of the data units 1 to 10 comprises a first TA, a first TID, and a target flag (the target flag may be the first flag or the second flag), and each of the data units 11 to 20 comprises a first TA, a first TID, and a specific flag (the specific flag may be the first flag or the second flag), the second device allocates and/or controls two reception reordering buffers. One of the two reception reordering buffers is used for reordering the data units 1 to 10, and the other of the two reception reordering buffers is used for reordering the data units 11 to 20. Alternatively, the target flag may be the same as or different from the specific flag.

In some embodiments, the method further comprises the following operation.

The second device delivers the one or more data units to a next MAC process or an upper layer according to the SN order of the one or more data units.

Alternatively, the second device may submit each received data unit to the reception reordering buffer, order the data units according to the SN order, and delivers each received data unit to the next MAC process or the upper layer according to the SN order. Alternatively, if there is one unsuccessfully received data unit (for example, corresponding to the target SN), all the data units successfully received before the target SN are delivered in-order to the next MAC process or the upper layer, and only after the data unit corresponding to the target SN is received, the data unit corresponding to the target SN and the data units after the target SN are delivered in-order to the next MAC process or the upper layer.

In some embodiments, the one or more data units comprise a fourth data unit. The method further comprises: in a case where the fourth data unit is received and at least one fifth data unit is not received, the second device delivers the fourth data unit to a next MAC process or an upper layer.

An SN corresponding to the fifth data unit is less than an SN corresponding to the fourth data unit, or a transmitting time of the fifth data unit is earlier than a transmitting time of the fourth data unit, or the time of filling SN of the fifth data unit is earlier than the time of filling SN of the fourth data unit.

The fourth data unit and the fifth data unit satisfy one or more of the following:
a priority of a TID comprised in the fourth data unit is higher than a priority of a TID comprised in the fifth data unit;
a flag comprised in the fourth data unit is used to indicate that a transmission of the fourth data unit is urgent transmission, and a flag comprised in the fifth data unit is used to indicate that a transmission of the fifth data unit is non-urgent transmission or the fifth data unit does not comprise a flag; or
a flag comprised in the fourth data unit is used to indicate a third urgency degree or a third latency requirement of transmitting the fourth data unit, a flag comprised in the fifth data unit is used to indicate a fourth urgency degree or a fourth latency requirement of transmitting the fifth data unit, the third urgency degree is greater than the fourth urgency degree, and the third latency requirement is more urgent than the fourth latency requirement.

Alternatively, the transmitting time of the fifth data unit may be the transmitting time at which the first device transmits the fifth data unit. The transmitting time of the fourth data unit may be a transmitting time at which the first device transmits the fourth data unit. In this way, even if the fifth data unit is transmitted first and the fourth data unit is transmitted later, but the second device receives the fourth data unit first. The fourth data unit may be delivered to the next MAC process or the upper layer first, and then after the fifth data unit is received, the fifth data unit may be delivered to the next MAC process or the upper layer.

Alternatively, filling SN may be replaced by one of the following: assigning SN or adding SN.

In some embodiments, the operation that the second device delivers the fourth data unit to a next MAC process or an upper layer in a case where the fourth data unit is received and at least one fifth data unit is not received comprises the following operation.

The second device delivers the fourth data unit to a next MAC process or an upper layer in a case where the fourth data unit is received and at least one fifth data unit is not received and one or more of the following are satisfied:
a difference between an SN of the fourth data unit and a minimum value in SN(s) of the at least one fifth data unit is less than or equal to a first threshold value; or
a waiting time of the fourth data unit in the reception reordering buffer is greater than or equal to a second threshold.

Alternatively, the first threshold and/or the second threshold may be specified in the protocol, or may be set in advance.

An implementation manner of the allocation of replay counter(s) will be described below.

In some embodiments, the method further comprises the following operation.

The second device allocates replay counter(s) according to one or more of the following: TA, RA, TID, priority, or flag.

Alternatively, the second device may allocate replay counter(s) according to the TA, the RA, the TID, and the flag.

Alternatively, the second device may allocate replay counter(s) according to the TA, the RA, the priority, and the flag.

Alternatively, the second device may allocate replay counter(s) according to the TA, the RA, and the TID.

Alternatively, the second device may allocate replay counter(s) according to the TA, the RA, and the priority.

Alternatively, the second device may allocate replay counter(s) according to the TA and the RA.

Alternatively, the same TA, the same RA, the same TID or priority, and the same flag, replay counter(s) is allocated. Alternatively, the same TA and the same RA, replay counter(s) is allocated. Alternatively, the same TA, the same RA, and the same TID or priority, replay counter(s) is allocated. Alternatively, the same TA, the same RA, and the same flag, replay counter(s) is allocated.

Alternatively, different TAs correspond to different replay counters, and/or different RAs correspond to different replay counters, and/or different TIDs or priorities correspond to different replay counters, and/or different flags correspond to different replay counters.

For example, if one or more data units received by the second device include data units 1 to 10, and each of the data units 1 to 10 comprises a first TA, a first RA, a first TID, and a first flag, then the second device allocates a replay counter.

As another example, if one or more data units received by the second device comprise data units 1 to 18, each of the data units 1 to 10 comprises a first TA, a first RA, a first TID, and a first flag, and each of the data units 11 to 18 comprises a first TA, a first RA, a first TID, and a second flag, then the second device allocates two replay counters.

In some embodiments, the operation that the second device allocates replay counter(s) according to one or more of: TA, RA, TID, priority, or flag comprises the following operation.

In a case where the second device comprises a receiving STA that is non-MLD, the second device allocates replay counter(s) according to one or more of following: TA, RA of the receiving STA, TID, priority, or flag.

In this situation, in a case where the second device comprises a receiving STA that is not an MLD, the corresponding RA is the RA of the receiving STA.

In some embodiments, the operation that the second device allocates replay counter(s) according to one or more of: TA, RA, TID, priority, or flag comprises the following operation.

In a case where the second device comprises a receiving MLD, the second device allocates replay counter(s) according to one or more of following: an MAC address of a sending MLD to which a sending STA identified by TA is affiliated, an MAC address of a receiving MLD to which a receiving STA identified by RA is affiliated, TID, priority, or flag.

In this situation, in a case where the second device comprises a receiving MLD, the corresponding TA is the MAC address of a sending MLD to which a sending STA identified by the TA is affiliated, and the corresponding RA is the MAC address of a receiving MLD to which a receiving STA identified by the RA is affiliated.

In some embodiments, QoS data corresponding to each RA and/or each TID adopts one or more replay counters.

Alternatively, QoS data corresponding to each RA and each TID adopts one or more replay counters. Alternatively, QoS data corresponding to each RA adopts one or more replay counters. Alternatively, QoS data corresponding to each TID adopts one or more replay counters. Alternatively, QoS data corresponding to each TA, each RA, and each TID adopts one or more replay counters.

Alternatively, different TAs correspond to different QoS data, and/or, different RAs correspond to different QoS data, and/or different TIDs correspond to different QoS data.

Alternatively, the replay counter adopted by the data unit(s) indicating urgent transmission is different from the replay counter adopted by the data unit(s) indicating non-urgent transmission. Alternatively, the data unit(s) indicating different urgency degrees or different latency requirements adopts different replay counters.

Alternatively, the replay counter adopted by the data unit(s) indicating urgent transmission is the same as the SN counter adopted by the data unit(s) indicating non-urgent transmission. Alternatively, the data units indicating different urgency degrees or different latency requirements adopt the same replay counter.

In some embodiments, the second device allocates replay counter(s) according to the TA, the RA, the TID or priority, and the flag. Correspondingly, QoS data corresponding to the TID adopts one or more replay counters. For example, two replay counters are adopted if two different flags are comprised in one or more data units. For another example, one replay counter is adopted if one or more data units comprise a flag.

In some embodiments, the one or more data units comprise a sixth data unit. The method further comprises the following method.

In a case where a PN of the sixth data unit received by the second device is greater than a value of replay counter(s), the second device determines that the sixth data unit passes the replay detection.

In some embodiments, the one or more data units comprise a seventh data unit. The method further comprises the following operation.

In a case where a PN of the seventh data unit received by the second device is less than or equal to a value of the replay counter(s), the seventh data unit is discarded.

In some embodiments, the one or more data units comprise an eighth data unit. The method further comprises the following operation.

In a case where a PN of the eighth data unit received by the second device is within a range of a PN window, the second device determines that the eighth data unit passes the replay detection. A starting PN of the PN window is a difference between a last currently recorded PN and a size of the PN window, and an ending PN of the PN window is the last currently recorded PN.

Alternatively, the second device may further perform the following operation: updating the PN window in a case where the last currently recorded PN changes.

For example, if the data unit(s) corresponding to the first PN and the third PN in the current PN window does not arrive, the starting PN of the PN window is the first PN. If the data unit corresponding to the first PN arrives, in this case, the starting PN of the PN window is updated to the third PN, and the PN window size remains unchanged.

In some embodiments, the one or more data units comprise a ninth data unit. The method further comprises the following operation.

In a case where a PN of the ninth data unit received by the second device is not within a range of a PN window, the second device discards the ninth data unit.

In some embodiments, in a case where QoS data corresponding to RA and/or TID adopts one or more of following: one PN space, one PN counter, or one PN sequence, the second device performs replay detection of PN according to a PN window.

In some embodiments, in a case where QoS data corresponding to RA and/or TID adopts one or more of following: a plurality of PN spaces, a plurality of PN counters, or a plurality of PN sequences, the second device performs replay detection of PN according to a PN window, or the second device performs replay detection of PN according to PN replay counter(s).

Alternatively, in a case where QoS data corresponding to RA and/or TID adopts one or more of following: a plurality of PN spaces, a plurality of PN counters, or a plurality of PN sequences, the second device performs replay detection of the PN according to the PN window.

Alternatively, in a case where QoS data corresponding to RA and/or TID adopts one or more of following: a plurality of PN spaces, a plurality of PN counters, or a plurality of PN sequences, the second device performs replay detection of PN according to a PN replay counter(s).

In some embodiments, the flag and/or TID comprised by each data unit is comprised in an HT control field of the each data unit.

In some embodiments, the HT control field corresponds to an HE variant. The flag and/or TID comprised by each data unit is comprised in a control subfield of an A-Control subfield of the HT control field.

In some embodiments, each of the one or more data units comprises one of the following: a data frame, a data packet, QoS data, an MAC protocol data unit (MPDU), an MAC service data unit (MSDU), MSDUs, an aggregation-MSDU (A-MSDU), A-MSDUs, or a MAC management protocol data unit (MMPDU).

Some implementations of the present application are described below.

At an originator corresponding to the first device, the first device transmits a first data unit. The first data unit comprises: a first RA, a first TA, a first TID, a first priority, a first flag, a first SN, and a first PN. The first flag is used to indicate that the transmission of the first data unit is urgent transmission, or to indicate a first urgency degree or a first latency requirement of transmitting the first data unit. The first device allocates SN counter(s) or SN sequence(s), and/or determines the first SN, according to the first RA, the first TID, and the first flag. The QoS data corresponding to the first RA and/or the first TID adopts one or more of the following: a plurality of SN spaces, a plurality of SN counters, or a plurality of SN sequences. The first device allocates PN counter(s) or PN sequence(s), and/or determines the first PN, according to the first TA, the first RA, the first TID, and the first flag. The QoS data corresponding to the first RA and/or the first TID adopts one or more of the following: a plurality of PN spaces, a plurality of PN counters, or a plurality of PN sequences.

At a recipient corresponding to a second device, the second device allocates and/or controls reception reordering buffer(s) according to TA, TID, and flag. The second device allocates a replay counter(s) according to TA, RA, TID and flag. QoS data corresponding to each RA and/or each TID adopts a plurality of replay counters.

Some implementations of the present application are described below.

At an originator corresponding to the first device, the first device transmits a first data unit. The first data unit comprises: a first RA, a first TA, a first TID, a first priority, a first flag, a first SN, and a first PN. The first flag is used to indicate that the transmission of the first data unit is urgent transmission, or to indicate a first urgency degree or a first latency requirement of transmitting the first data unit. The first device allocates SN counter(s) or SN sequence(s), and/or determines the first SN, according to the first RA and the first TID. The QoS data corresponding to the first RA and/or the first TID adopts one or more of the following: one SN space, one SN counter, or one SN sequence. The first device allocates PN counter(s) or PN sequence(s), and/or determines the first PN, according to the first TA, the first RA, and the first TID. The QoS data corresponding to the first RA and/or the first TID adopts one or more of the following: one PN space, one PN counter, or one PN sequence.

At a recipient corresponding to a second device, the second device allocates and/or controls the reception reordering buffer(s) according to the TA and the TID. The second device allocates replay counter(s) according to TA, RA, and TID. QoS data corresponding to each RA and/or each TID adopts one replay counter.

Some implementations of the present application are described below.

### Embodiment 1

For a specific TID, data units of different traffic flows or different flags are distinguished and processed.

For a scenario in which a plurality of traffic flows are mapped to a specific TID, data units (such as MSDUs or A-MSDUs, MPDUs, A-MPDUs) of different traffic flows corresponding to a specific TID are distinguished based on the transmission latency requirements of different traffic flows, for example, they can be distinguished as data units corresponding to low-latency traffic flows (or referred to as latency-sensitive traffic flows) and data units corresponding to non-low-latency traffic flows. Different sending mechanisms and/or receiving mechanisms are adopted at the sending end and/or the receiving end.

The sending end processing mechanism of the embodiment of the present application is described below.

### (1) Data unit flag.

Flagging data units corresponding to different traffic flows or different transmission latency requirements (or transmission urgency degrees) or other QoS requirements of a specific TID to distinguish data units of different traffic flows or different transmission latency requirements.

### (2) SN allocation and processing.

### i) The SN counter(s) or SN sequence(s) is allocated according to < Ra/address 1, TID i, traffic flag/data unit flag >.

In this way, the SN counter(s) or SN sequence(s) can be allocated according to following three items: the first item is RA/address 1, the second item is TID i, and the third item is traffic flag/data unit flag. Alternatively, i is an integer greater than or equal to 0.

For a given recipient, the QoS data (i.e., individually addressed QoS data unit) corresponding to specific TID (such as TID i) may adopt one or more SN space(s) and one or more counters. For example, for the SN space of a specific individually addressed QoS data unit, in a case where the recipient is STA, the counter is indexed by <address 1, TID i, traffic flag/data unit flag> , while in a case where the recipient is MLD, the counter is indexed by < MAC address of MLD to which the STA identified by address 1 is affiliated, TID i, traffic flag/data unit flag >. The address 1 refers to the RA of the STA.

### ii) Allocate the SN counter(s) or SN sequence(s) according to <RA/address 1, TID i>.

In this way, the SN counter(s) or SN sequence(s) can be allocated according to following two items: the first item is RA/address 1, and the second item is TID i.

For a given recipient, the QoS data corresponding to TID i (i.e., individually addressed QoS data unit) adopts only one SN space and one counter, i.e. in a case where the recipient is STA, the counter is indexed by <address 1, TID i>, while in a case where the recipient is MLD, the counter is indexed by <MAC address of MLD to which the STA identified by address 1 is affiliated, TID i> . The address 1 refers to the RA of the receiving STA.

### (3) PN allocation and processing.

The PN counter(s) or PN sequence(s) is allocated according to < TA, RA, TID i /corresponding priority, traffic flag/data unit flag>.

In this way, the PN counter(s) or PN sequence(s) can be allocated according to following four items: the first item is TA, the second item is RA, the third item is TID i/corresponding priority, and the fourth item is traffic flag/data unit flag.

For a given recipient, the QoS data (i.e., individually addressed QoS data unit) corresponding to a specific TID (e.g., TID i) may adopt one or more PN spaces and one or more counters (or PN sequences), i.e., in the case where the recipient is STA, the replay counter is associated with <TA, RA, TID i/corresponding priority, traffic flag/data unit flag>, while in a case where the recipient is MLD, the counter is associated with <MAC address of MLD to which the STA identified by TA is affiliated, MAC address of MLD to which the STA identified by RA is affiliated, TID i or corresponding priority, traffic flag/data unit flag>.

### ii) The PN counter(s) or PN sequence(s) is allocated according to < TA, RA, TID i or corresponding priority >.

In this way, the PN counter(s) or PN sequence(s) can be allocated according to following three items, the first item is TA, the second item is RA, and the third item is TID i/corresponding priority.

For a given recipient, the QoS data corresponding to TID i (i.e., individually addressed QoS data unit) adopts only one PN space and one counter (or PN sequence), i.e. in a case where the recipient is STA, the counter is associated with <TA, RA, TID i/corresponding priority>, while in a case where the recipient is MLD, the counter is associated with <MAC address of MLD to which the STA identified by TA is affiliated, MAC address of MLD to which the STA identified by RA is affiliated, TID i or corresponding priority> .

### (4) Data unit processing mechanism of sending buffer or line.

At the sending end, for a specific TID, it is necessary to send, in priority, data units corresponding to low-latency traffic flows (or latency-sensitive traffic flows) in the transmission line or send, in priority, data units with high urgency degree or need to be sent first. For example, in the transmission line, if there are data units corresponding to low-latency traffic flows newly entering the line, even if there are data units corresponding to non-low-latency traffic flows at the head of the current line, the sending order of the data units in the transmission line is reordered, so that the data units corresponding to low-latency traffic flows are scheduled to the head of the transmission line for sending in priority.

The receiving end processing mechanism of the embodiment of the present application will be described below.

### (1) SN processing and reordering.

### i) Allocate and/or control reordering buffer(s) according to <TA, TID i, traffic flag/data unit flag>.

In this way, the reordering buffer(s) can be allocated and/or controlled according to following three items: the first item is TA, the second item is TID i, and the third item is traffic flag/data unit flag.

At the recipient, the reception reordering buffer corresponding to each <TA, TID i, traffic flag/data unit flag> is allocated and controlled, and the reception reordering buffer is responsible for reordering MSDU or A-MSDU corresponding to the <TA, TID i, traffic flag/data unit flag> . Meanwhile, it is also responsible for identifying and discarding duplicate frames (i.e. frames with the same sequence number). Also, the data unit may be delivered to the next MAC process (or to the upper layer) by using one of the following ways.
(i) The data units are finally delivered to the next MAC process (or to the upper layer) according to the order of receiving sequence numbers.
(ii) For a data unit of a specific traffic ID or flag (such as flagging low latency, urgent transmission, or priority transmission), even if there is previously unreceived data unit corresponding to SN lower than that of this data unit (i.e., the data unit of which the transmission order is earlier but not yet received), in a case where the given condition is met (for example, when the difference between the SN of the received and to-be-transmitted data unit and the SN of an unreceived data unit (for example, the earliest unreceived data unit can be used) is less than or equal to a to-be-determined threshold, and/or the waiting time of the received and to-be-transmitted data unit in the buffer area is greater than a time threshold), the MSDU or A-MSDU of this specific traffic ID or flag is still delivered to the next MAC process (or delivered to the upper layer).

### ii) Allocate and/or control reordering buffer(s) according to <TA, TID i>.

In this way, the reordering buffer(s) may be allocated and/or controlled according to following two items: the first item is TA and the second item is TID i.

At the recipient, the reception reordering buffer corresponding to each <TA, TID i> is allocated and controlled, and the reception reordering buffer is responsible for reordering data units (such as MSDU or A-MSDU) corresponding to the TA and TID. It is also responsible for identifying and discarding duplicate frames (i.e. frames with the same sequence number). Also, the data unit may be delivered to the next MAC process (or to the upper layer) by using one of the following ways.
(i) The data units are finally delivered to the next MAC process (or to the upper layer) according to the order of receiving sequence numbers.
(ii) For a data unit of a specific traffic ID or flag (such as flagging low latency, urgent transmission, or priority transmission), even if there is previously unreceived data unit corresponding to SN lower than that of this data unit (i.e., the data unit of which the transmission order is earlier but not yet received), in a case where the given condition is met (for example, when the difference between the SN of the received and to-be-transmitted data unit and the SN of an unreceived data unit (for example, the earliest unreceived data unit can be used) is less than or equal to a to-be-determined threshold, and/or the waiting time of the received and to-be-transmitted data unit in the buffer area is greater than a time threshold, and/or the unreceived data unit is a data unit without flagging low latency or transmission in priority), the MSDU or A-MSDU of this specific traffic ID or flag is still delivered to the next MAC process (or delivered to the upper layer).

### (2) PN processing and replay detection.

### i) The replay counter(s) is allocated according to < TA, RA, TID i /corresponding priority , traffic flag/data unit flag>, and the replay detection is performed.

In this way, the replay counter(s) can be allocated according to following four items: the first item is TA, the second item is RA, the third item is TID i/corresponding priority, and the fourth item is traffic flag/data unit flag.

For a given recipient, the QoS data (i.e., individually addressed QoS data unit) corresponding to a specific TID (e.g., TID i) may adopt one or more replay counters, i.e., in a case where the recipient is STA, the replay counter is associated with <TA, RA, TID i/corresponding priority, traffic flag/data unit flag>, while in a case where the recipient is MLD, the replay counter is associated with <MAC address of MLD to which the STA identified by TA is affiliated, MAC address of MLD to which the STA identified by RA is affiliated, TIDi or corresponding priority, traffic flag/data unit flag>.

Also, the replay detection of the data unit may be performed in one of the following ways.

### (i) Replay detection based on PN replay counter.

If the PN of the received QoS data unit is greater than the value of the replay counter associated with <TA, RA, TID i/ corresponding priority, traffic flag/data unit flag> (such as the MAC address of sending MLD, the MAC address of receiving MLD (personal or group address) and the priority value or corresponding TID of the receiving data unit (e.g., MPDU), and the traffic flag/data unit flag are adopted for the MLD, and the MAC address of sending STA, the MAC address of receiving STA (personal or group address) and the priority value or corresponding TID of the receiving data unit (e.g., MPDU), and the traffic flag/data unit flag are adopted for non-MLD STA), the data unit passes the replay detection.

Any data frame whose PN is less than or equal to the value of the replay counter associated with <TA, RA, TID i/corresponding priority, traffic flag/data unit flag> (such as the MAC address of sending MLD, the MAC address of receiving MLD (personal or group address) and the priority value or corresponding TID of the receiving MPDU, and the traffic flag/data unit flag are adopted for the MLD, and the MAC address of sending STA, the MAC address of receiving STA (personal or group address) and the priority value or corresponding TID of the receiving data unit (e.g., MPDU), and the traffic flag/data unit flag are adopted for non-MLD STA) are discarded.

### (ii) PN window-based replay detection.

If the PN of the received QoS data unit matches the record entry corresponding to the current PN window (for example, the PN number is within the range indicated by [the currently recorded last PN-PN window size, the currently recorded last PN]), the data unit passes the replay detection, and at the same time, the PN window is updated to [the last PN-PN window size, the last PN] (if the last PN changes).

If the PN of the received QoS data unit does not match the record entry corresponding to the current PN window (for example, the PN number is not within the range indicated by [the currently recorded last PN-PN window size, the currently recorded last PN]), the data unit is discarded.

### (ii) The replay counter(s) is allocated according to < TA, RA, TID i /corresponding priority>, and the replay detection is performed.

In this way, the replay counter(s) can be allocated according to following three items: the first item is TA, the second item is RA, and the third item is TID i/corresponding priority.

For a given recipient, the QoS data corresponding to TID i (i.e., individually addressed QoS data unit) adopts only one replay counter, i.e. in a case where the recipient is STA, the replay counter is associated with <TA, RA, TID i/corresponding priority>, while in a case where the recipient is MLD, the replay counter is associated with <MAC address of MLD to which the STA identified by TA is affiliated, MAC address of MLD to which the STA identified by RA is affiliated, TID i or corresponding priority> .

Also, the replay detection of the data unit may be performed in one of the following ways.

### (i) Replay detection based on PN replay counter.

If the PN of the received QoS data unit is greater than the value of the replay counter associated with <TA, RA, TID i/ corresponding priority> (such as the MAC address of sending MLD, the MAC address of receiving MLD (personal or group address) and the priority value or corresponding TID of the receiving data unit (e.g., MPDU) are adopted for the MLD, and the MAC address of sending STA, the MAC address of receiving STA (personal or group address) and the priority value or corresponding TID of the receiving data unit (e.g., MPDU) are adopted for non-MLD STA), the data unit passes the replay detection.

Any data frame whose PN is less than or equal to the value of the replay counter associated with <TA, RA, TID i/corresponding priority> (such as the MAC address of sending MLD, the MAC address of receiving MLD (personal or group address) and the priority value or corresponding TID of the receiving MPDU are adopted for the MLD, and the MAC address of sending STA, the MAC address of receiving STA (personal or group address) and the priority value or corresponding TID of the receiving data unit (e.g., MPDU) are adopted for non-MLD STA) are discarded.

### (ii) PN window-based replay detection.

If the PN of the received QoS data unit matches the record entry corresponding to the current PN window (for example, the PN number is within the range indicated by [the currently recorded last PN-PN window size, the currently recorded last PN]), the data unit passes the replay detection, and at the same time, the PN window is updated to [the last PN-PN window size, the last PN] (if the last PN changes).

If the PN of the received QoS data unit does not match the record entry corresponding to the current PN window (for example, the PN number is not in the range indicated by [the currently recorded last PN-PN window size, the currently recorded last PN]), the data unit is discarded.

### Embodiment 2

For a specific TID, data units are processed uniformly (i.e., data units with different traffic flows or different flags are not distinguished).

The sending end processing mechanism of the embodiment of the present application is described below.

### (1) Data units are not flagged to distinguish the transmission urgency degrees (or whether it is low latency).

For a specific TID, data units of different traffic flows or different flags are not distinguished. Data units, of a specific TID, corresponding to different traffic flows, different transmission latency requirements, different transmission urgency degrees or other QoS requirements are not flagged.

### (2) SN allocation and processing.

The SN counter or SN sequence is allocated according to <RA/address 1, TID i>.

In this way, the SN counter(s) or SN sequence(s) can be allocated according to following two items: the first item is RA/address 1, and the second item is TID i.

For a given recipient, the QoS data corresponding to a specific TID (TID i) (i.e., individually addressed QoS data unit) adopts only one SN space and one counter, i.e. in a case where the recipient is STA, the counter is indexed by <address 1, TID i>, while in a case where the recipient is MLD, the counter is indexed by <MAC address of MLD to which the STA identified by address 1 is affiliated, TID i> . The address 1 refers to the RA of the receiving STA.

### (3) PN allocation and processing.

The PN counter(s) or PN sequence(s) is allocated according to < TA, RA, TID i/corresponding priority >.

In this way, the PN counter(s) or PN sequence(s) can be allocated according to following three items, the first item is TA, the second item is RA, and the third item is TID i/corresponding priority.

For a given recipient, the QoS data corresponding to TID i (i.e., individually addressed QoS data unit) adopts only one PN space and one counter (or PN sequence), i.e. in a case where the recipient is STA, the counter is associated with <TA, RA, TID i/corresponding priority>, while in a case where the recipient is MLD, the counter is associated with <MAC address of MLD to which the STA identified by TA is affiliated, MAC address of MLD to which the STA identified by RA is affiliated, TID i or corresponding priority> .

The receiving end processing mechanism of the embodiment of the present application will be described below.

### (1) SN processing and reordering.

The reordering buffer(s) is allocated and/or controlled according to <TA, TID i>.

In this way, the reordering buffer(s) may be allocated and/or controlled according to following two items: the first item is TA and the second item is TID i.

At the recipient, the reception reordering buffer corresponding to each <TA, TID i> is allocated and controlled, and the reception reordering buffer is responsible for reordering data units (such as MSDU or A-MSDU) corresponding to the TA and TID. It is also responsible for identifying and discarding duplicate frames (i.e. frames with the same sequence number). Also, the data unit may be delivered to the next MAC process (or to the upper layer) by using one of the following ways.
(i) The data units are finally delivered to the next MAC process (or to the upper layer) according to the order of receiving sequence numbers.
(ii) For a received data unit, even if there is previously unreceived data unit corresponding to SN lower than that of this data unit (i.e., the data unit of which the transmission order is earlier but not yet received), in a case where the given condition is met (for example, when the difference between the SN of the received and to-be-transmitted data unit and the SN of an unreceived data unit (for example, the earliest unreceived data unit can be used) is less than or equal to a to-be-determined threshold, and/or the waiting time of the received and to-be-transmitted data unit in the buffer area is greater than a time threshold), the date unit (such as MSDU or A-MSDU) of this specific traffic ID or flag is still delivered to the next MAC process (or delivered to the upper layer).

### (2) PN processing and replay detection.

The replay counter(s) is allocated according to < TA, RA, TID i /corresponding priority>, and the replay detection is performed.

In this way, the replay counter(s) can be allocated according to following three items: the first item is TA, the second item is RA, and the third item is TID i/corresponding priority.

For a given recipient, the QoS data corresponding to TID i (i.e., individually addressed QoS data unit) adopts only one replay counter, i.e. in a case where the recipient is STA, the replay counter is associated with <TA, RA, TID i/corresponding priority>, while in a case where the recipient is MLD, the replay counter is associated with <MAC address of MLD to which the STA identified by TA is affiliated, MAC address of MLD to which the STA identified by RA is affiliated, TID i or corresponding priority> .

Also, the replay detection of the data unit may be performed in one of the following ways.

### (i) Replay detection based on PN replay counter.

If the PN of the received QoS data unit is greater than the value of the replay counter associated with <TA, RA, TID i/ corresponding priority> (such as the MAC address of sending MLD, the MAC address of receiving MLD (personal or group address) and the priority value or corresponding TID of the receiving data unit (e.g., MPDU) are adopted for the MLD, and the MAC address of sending STA, the MAC address of receiving STA (personal or group address) and the priority value or corresponding TID of the receiving data unit (e.g., MPDU) are adopted for non-MLD STA), the data unit passes the replay detection.

Any data frame whose PN is less than or equal to the value of the replay counter associated with <TA, RA, TID i/corresponding priority> (such as the MAC address of sending MLD, the MAC address of receiving MLD (personal or group address) and the priority value or corresponding TID of the receiving MPDU are adopted for the MLD, and the MAC address of sending STA, the MAC address of receiving STA (personal or group address) and the priority value or corresponding TID of the receiving data unit (e.g., MPDU) are adopted for non-MLD STA) are discarded.

### (ii) PN window-based replay detection.

If the PN of the received QoS data unit matches the record entry corresponding to the current PN window (for example, the PN number is within the range indicated by [the currently recorded last PN-PN window size, the currently recorded last PN]), the data unit passes the replay detection, and at the same time, the PN window is updated to [the last PN-PN window size, the last PN] (if the last PN changes).

If the PN of the received QoS data unit does not match the record entry corresponding to the current PN window (for example, the PN number is not in the range indicated by [the currently recorded last PN-PN window size, the currently recorded last PN]), the data unit is discarded.

Some implementations of the present application will be described below based on the above-described embodiments.

For a specific TID, a data unit that needs urgent transmission (or called as low latency transmission) is flagged or indicated at the data unit header, so as to distinguish an urgent transmission data unit or a non-urgent transmission data unit.

For example, an urgent transmission indication field is added to the control field of the data unit to indicate the urgency degree of transmitting the data unit. When the value of the urgent transmission indication field is 1, it indicates that the data unit is a data unit that needs urgent transmission. When the value of the urgent transmission indication field is 0, it indicates that the data unit is a data unit of non-urgent transmission. When the data unit does not carry the urgent transmission indication field, the data unit is considered to be a data unit of non-urgent transmission.

For a specific TID (such as TID i), the corresponding traffic identifier is further flagged or indicated at the data unit header, so as to distinguish the data units from different traffic flows under the same TID. For example, when the value of the traffic identifier is 1, it indicates that the data unit corresponds to a traffic flow whose traffic identifier being 1 under TID i.

For example, a "differentiated transmission indication" control subfield may be added in the A-Control subfield of the HE variant HT Control field. Here, the A-Control subfield of the HE variant HT Control field contains a control list subfield of variable length and a padding field of variable length (the length may also be 0). Here, the "control list" subfield comprises one or more "control" subfields. The control ID subfield indicates the information type carried in the control information subfield. The length of control information subfield is fixed for each value of the control ID subfield. The control ID subfield value of the differentiated transmission indication control subfield may be used to indicate the "urgent transmission indication" control subfield.

Table 1 is an example of a control ID subfield value provided by an embodiment of the present application.

**Table 1**

| Control ID Value | Meaning | The length (bits) of the control information subfield. |
|---|---|---|
| ... | | |
| 10 (or other value) | Differentiated transmission indication | 8 (or other value) |
| ... | | |

In Table 1, the control ID subfield value is 10 (or another value, for example, 1, 11, 0, 100, or 1000, etc.), which indicates differentiated transmission indication, and the length of the corresponding control information subfield is 8 bits (or another length value, for example, 0 bit, 2 bits, 4 bits, or 16 bits, etc.). It should be noted that, Table 1 shows control ID subfield values corresponding to the distinguished transmission indication. In other embodiments, there may be other control ID subfield values in Table 1, as well as corresponding meanings and the lengths of control information subfield.

It should be noted that, in other embodiments, Table 1 may include only the value of control ID and the meaning, or may include only the value of control ID and the length of the control information subfield, or may include only the meaning and the length of the control information subfield.

Alternatively, the control subfield may include an identifier corresponding to the urgent transmission indication (for example, the identifier corresponding to the urgent transmission indication may include a "control ID" subfield corresponding to the urgent transmission indication), a traffic identifier, and a reservation field. The length of the identifier corresponding to the urgent transmission indication may be 0, or another length, or a variable length. The length corresponding to the traffic identifier may be 0, or another length, or variable length. The length corresponding to the reserved field may be 0, or another length, or a variable length. Alternatively, the another length or variable length may be any number of bits greater than or equal to 1.

The following describes SN processing and duplicate detection and recovery.

Because MAC-level acknowledgements and retransmissions are incorporated into the protocol, a frame may be received multiple times. By including the sequence control field (composed of a sequence number and a fragment number) in data, management, and extension frames, as well as the TID subfield in the QoS Control field in QoS data frames and/or the "differentiated transmission indication" control subfield of the HT Control field (HE variant), duplicate frame filtering can be facilitated.

The sending STA should support the applicable sequence number space (SNS) defined in Table 2, which is an example of the sending STA SNS.

**Table 2**

| SNS ID | SNS | Application | Multiplicity |
|---|---|---|---|
| SNS2 | Individually addressed QoS data | STA that transmits individually addressed QoS data frames, excluding SNS5 and SNS9 | Indexed by <Address 1, TID, stream ID or data unit flag> |
| SNS9 | Individually addressed QoS data | The MLD transmits, through any STA affiliated to the MLD, an individually addressed QoS data frame, which is not a QoS (+) Null frame, to a STA affiliated to another MLD. | Each MLD is indexed by < MAC address of MLD to which the STA identified by address 1 is affiliated, TID, stream ID or data unit flag >. |

It should be noted that, in other embodiments, only SNS2 or SNS9 may be included in Table 2. In other embodiments, other sequence number space identifiers may also be included in Table 2. In other embodiments, Table 2 may include any one or any two or any three of: sequence number space identifier, sequence number space, application, or multiplicity.

The applicability is defined by the "application" column. The multiplicity column indicates whether the SNS contains a single counter or multiple counters. In the latter case, any index is identified. Here, for a non-MLD sending STA, the counter adopted by its individually addressed QoS data may be indexed by <address 1, TID, stream identifier or data unit flag>. For a sending STA affiliated to MLD, the counter adopted by its individually addressed QoS data may be indexed by <the MAC address of MLD to which the STA identified by address 1 is affiliated, TID, stream ID or data unit flag>.

An implementation of data unit processing of distinguishing data units and adopting replay detection based on a PN replay counter will be described below.

### 1) Sending end processing mechanism.

### (1) Data unit flag.

Flagging data units corresponding to different traffic flows or different transmission latency requirements (or transmission urgency degrees) or other QoS requirements of a specific TID to distinguish data units of different traffic flows or different transmission latency requirements.

### (2) SN allocation and processing.

The SN counter(s) or SN sequence(s) is allocated according to < RA/address 1, TID i, stream ID/data unit flag >.

For a given recipient, the QoS data (i.e., individually addressed QoS data unit) corresponding to specific TID (such as TID i) may adopt one or more SN space(s) and one or more counters. For example, for the SN space of a specific individually addressed QoS data unit, in a case where the recipient is STA, the counter is indexed by <address 1, TID i, stream ID/data unit flag> , while in a case where the recipient is MLD, the counter is indexed by < MAC address of MLD to which the STA identified by address 1 is affiliated, TID i, stream ID/data unit flag >.

### (3) PN allocation and processing.

The PN counter(s) or PN sequence(s) is allocated according to < TA, RA, TID i/corresponding priority, stream ID/data unit flag>.

For a given recipient, the QoS data (i.e., individually addressed QoS data unit) corresponding to a specific TID (such as TID i) may adopt one or more PN spaces and one or more counters (or PN sequences), i.e., in the case where the recipient is STA, the replay counter is associated with <TA, RA, TID i or corresponding priority, stream ID/data unit flag>, while in a case where the recipient is MLD, the counter is associated with <MAC address of MLD to which the STA identified by TA is affiliated, MAC address of MLD to which the STA identified by RA is affiliated, TID i or corresponding priority, stream ID/data unit flag>.

### (4) Data unit processing mechanism of sending buffer or line.

At the sending end, for a specific TID, it is necessary to send, in priority, data units corresponding to low-latency traffic flows (or latency-sensitive traffic flows) in the transmission line or send, in priority, data units with high urgency degree or data units need to be sent first. For example, in the transmission line, if there are data units corresponding to low-latency traffic flows newly entering the line, even if there are data units corresponding to non-low-latency traffic flows at the head of the current line, the sending order of the data units in the transmission line is reordered, so that the data units corresponding to low-latency traffic flows are scheduled to the head of the transmission line for sending in priority.

### 2) Receiving end processing mechanism.

### (1) SN processing and reordering.

### i) Allocate and/or control reordering buffers according to <TA, TID i, stream ID or data unit flag>.

At the recipient, the reception reordering buffer corresponding to each <TA, TID i, stream ID or data unit flag> is allocated and controlled, and the reception reordering buffer is responsible for reordering MSDU or A-MSDU corresponding to the <TA, TID i, stream ID or data unit flag>. Meanwhile, it is also responsible for identifying and discarding duplicate frames (i.e. frames with the same sequence number). Also, the data unit may be delivered to the next MAC process (or to the upper layer) by using the following manner.

The data units are finally delivered to the next MAC process (or to the upper layer) according to the order of receiving sequence numbers.

### (2) PN processing and replay detection.

The replay counter(s) is allocated according to < TA, RA, TID i or corresponding priority, stream ID or data unit flag>, and the replay detection is performed.

For a given recipient, the QoS data (i.e., individually addressed QoS data unit) corresponding to a specific TID (e.g., TID i) may adopt one or more replay counters, i.e., in a case where the recipient is STA, the replay counter is associated with <TA, RA, TID i or corresponding priority, stream ID/data unit flag>, while in a case where the recipient is MLD, the replay counter is associated with <MAC address of MLD to which the STA identified by TA is affiliated, MAC address of MLD to which the STA identified by RA is affiliated, TIDi or corresponding priority, stream ID or data unit flag>.

Also, replay detection may be performed on the data unit using the replay detection based on PN replay counter.

If the PN of the received QoS data unit is greater than the value of the replay counter associated with <TA, RA, TID i or corresponding priority, stream ID/data unit flag> (such as the MAC address of sending MLD, the MAC address of receiving MLD (personal or group address) and the priority value or corresponding TID of the receiving data unit (e.g., MPDU), and the stream ID or data unit flag are adopted for the MLD, and the MAC address of sending STA, the MAC address of receiving STA (personal or group address) and the priority value or corresponding TID of the receiving data unit (e.g., MPDU), and the stream ID or data unit flag are adopted for non-MLD STA), the data unit passes the replay detection.

Any data frame whose PN is less than or equal to the value of the replay counter associated with <TA, RA, TID i/corresponding priority, stream ID/data unit flag> (such as the MAC address of sending MLD, the MAC address of receiving MLD (personal or group address) and the priority value or corresponding TID of the receiving MPDU, and the stream ID/data unit flag are adopted for the MLD, and the MAC address of sending STA, the MAC address of receiving STA (personal or group address) and the priority value or corresponding TID of the receiving data unit (e.g., MPDU), and the stream ID/data unit flag are adopted for non-MLD STA) are discarded.

An implementation of data unit processing that does not distinguish between data units and adopts PN window-based replay detection is described below.

### 1) Sending end processing mechanism.

### (1) The data unit is not flagged to distinguish the transmission urgency degree (or whether the latency is low).

For a specific TID, data units of different traffic flows or different flags are not distinguished. Data units, of a specific TID, corresponding to different traffic flows, different transmission latency requirements, different transmission urgency degrees or other QoS requirements are not flagged.

### (2) SN allocation and processing.

The SN counter or SN sequence is allocated according to <RA/address 1, TID i>.

For a given recipient, the QoS data corresponding to a specific TID (TID i) (i.e., individually addressed QoS data unit) adopts only one SN space and one counter, i.e. in a case where the recipient is STA, the counter is indexed by <address 1, TID i>, while in a case where the recipient is MLD, the counter is indexed by <MAC address of MLD to which the STA identified by address 1 is affiliated, TID i> . The address 1 refers to the RA of the receiving STA.

### (3) PN allocation and processing.

The PN counter or PN sequence is allocated according to < TA, RA, TID i or corresponding priority >.

For a given recipient, the QoS data corresponding to TID i (i.e., individually addressed QoS data units) adopts only one PN space and one counter (or PN sequence), i.e., in a case where the recipient is a STA, the counter is associated by <TA, RA, TID i or the corresponding priority>, while in a case where the recipient is an MLD, the counter is associated by < MAC address of MLD to which the STA identified by TA is affiliated, MAC address of MLD to which the STA identified by RA is affiliated, TID i or corresponding priority>.

### 2) Receiving end processing mechanism.

### (1) SN processing and reordering.

The reordering buffer(s) is allocated and/or controlled according to <TA, TID i>.

At the recipient, the reception reordering buffer corresponding to each <TA, TID i> is allocated and controlled, and the reception reordering buffer is responsible for reordering data units (such as MSDU or A-MSDU) corresponding to the TA and TID. It is also responsible for identifying and discarding duplicate frames (i.e. frames with the same sequence number). Also, the data unit may be delivered to the next MAC process (or to the upper layer) in the following manner.

For a received data unit, even if there is previously unreceived data unit corresponding to SN lower than that of this data unit (i.e., the data unit of which the transmission order is earlier but not yet received), in a case where the given condition is met (for example, when the difference between the SN of the received and to-be-transmitted data unit and the SN of an unreceived data unit (for example, the earliest unreceived data unit can be used) is less than or equal to a to-be-determined threshold, and/or the waiting time of the received and to-be-transmitted data unit in the buffer area is greater than a time threshold), the date unit (such as MSDU or A-MSDU) of this specific traffic ID or flag is still delivered to the next MAC process (or delivered to the upper layer).

### (2) PN processing and replay detection.

The replay counter(s) is allocated according to < TA, RA, TID i or corresponding priority>, and the replay detection is performed.

For a given recipient, the QoS data corresponding to TID i (i.e., individually addressed QoS data unit) adopts only one replay counter, i.e. in a case where the recipient is STA, the replay counter is associated with <TA, RA, TID i or corresponding priority>, while in a case where the recipient is MLD, the replay counter is associated with <MAC address of MLD to which the STA identified by TA is affiliated, MAC address of MLD to which the STA identified by RA is affiliated, TID i or corresponding priority>.

Also, the replay detection of the data unit may be performed using PN window-based replay detection:
If the PN of the received QoS data unit matches the record entry corresponding to the current PN window (for example, the PN number is within the range indicated by [the currently recorded last PN-PN window size, the currently recorded last PN]), the data unit passes the replay detection, and at the same time, the PN window is updated to [the last PN-PN window size, the last PN] (if the last PN changes).

If the PN of the received QoS data unit does not match the record entry corresponding to the current PN window (for example, the PN number is not in the range indicated by [the currently recorded last PN-PN window size, the currently recorded last PN]), the data unit is discarded.

In the present application, for the head of line blocking problem caused by the mechanism of sending data units in-order adopted by the WiFi MAC layer, which is not conducive to the rapid transmission of the data units with low delay transmission requirements, the present application proposes a data unit communication method based on in-order/out-of-order processing, which solves the head of line blocking problem, so that the data units with low delay transmission requirements can be sent quickly.

It should be noted that the present application illustrates the in-order/out-of-order transmission mechanism in a single Basic Service Set (BSS) scenario and a multi-link operation scenario, and the scheme in the present application is also applicable to the in-order/out-of-order communication mechanism in a multi-AP cooperation scenario.

The preferred embodiments of the present application have been described in detail above with reference to the accompanying drawings, but the present application is not limited to the specific details in the above embodiments, and a variety of multiple simple modifications can be made to the technical scheme of the present application within the scope of the technical concept of the present application, and these simple modifications all belong to the protection scope of the present application. For example, each specific technical feature described in the above detailed description can be combined in any suitable manner unless there is no contradiction, and various possible combinations will not be further described in this application in order to avoid unnecessary repetition. As another example, any combination of various embodiments of the present application may be made, and as long as it does not depart from the idea of the present application, it should also be regarded as the disclosed content of the present application. For another example, on the premise that there is no conflict, each embodiment and/or the technical features in each embodiment described in the present application can be arbitrarily combined with the prior art, and the technical solution obtained after the combination should also fall within the protection scope of the present application.

It should also be understood that, in various embodiments of the present application, the size of the sequence number of the above-described processes does not mean the sequence of execution, and the sequence of execution of each process should be determined by its function and internal logic, and should not constitute any limitation on the implementation process of the embodiments of the present application. Further, in the embodiments of the present application, the terms "downlink", "uplink", and "sidelink" are used to indicate a transmission direction of a signal or data. The "downlink" is used to indicate that the transmission direction of the signal or data is a first direction transmitted from the station to the user equipment of the cell, "uplink" is used to indicate that the transmission direction of the signal or data is a second direction transmitted from the user equipment of the cell to the station, and "sidelink" is used to indicate that the transmission direction of the signal or data is a third direction transmitted from the user equipment 1 to the user equipment 2. For example, "downlink signal" means that the transmission direction of the signal is the first direction. In addition, in the embodiments of the present application, the term "and/or" is only an association relationship describing associated objects, and means that there may be three relationships. Specifically, A and/or B may mean the following three cases: A alone exists, A and B simultaneously exist, and B alone exists. In addition, the character "/" herein generally indicates that the related objects before and after this character are in an "or" relationship.

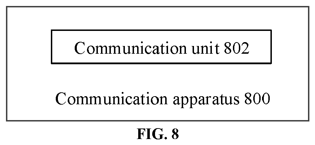

Fig. 8 is a schematic structure diagram of a communication apparatus provided by an embodiment of the present application. As shown in figure 8, the communication apparatus 800 includes a communication unit 800.

The communication unit 802 is configured to transmit a first data unit. The first data unit comprises one or more of following: a first receiver address (RA), a first transmitter address (TA), a first traffic identifier (TID), a first priority, a first flag, a first sequence number (SN), or a first packet number (PN).

The first SN and/or the first PN are determined according to one or more of the following: the first RA, the first TA, the first TID, the first priority, the first flag, whether out-of-order transmission is performed, or an out-of-order transmission mode.

In some embodiments, the communication apparatus 800 may further include a determination unit which is configured to determine the first data unit.

In some embodiments, the first flag is used to indicate that the transmission of the first data unit is urgent transmission, or to indicate that the transmission of the first data unit is non-urgent transmission, or to indicate a first urgency degree or a first latency requirement of transmitting the first data unit.

In some embodiments, the communication device 800 may further include an allocation unit.

In some embodiments, the allocation unit is configured to allocate SN counter(s) or an SN sequence(s), and/or determine the first SN, according to one or more of the following: the first RA, the first TID, or the first flag.

In some embodiments, the allocation unit is further configured to: in a case where a recipient comprises a receiving STA that is non-MLD, allocate SN counter(s) or SN sequence(s), and/or determine the first SN, according to one or more of following: the first RA of the receiving STA, the first TID, or the first flag.

In some embodiments, the allocation unit is further configured to: in a case where the recipient comprises a receiving MLD, allocate SN counter(s) or SN sequence(s), and/or determine the first SN, according to one or more of following: a media access control (MAC) address of a receiving MLD to which a receiving STA identified by the first RA is affiliated, the first TID, or the first flag.

In some embodiments, quality of service (QoS) data corresponding to the first RA and/or the first TID adopts one or more of following: one or more SN spaces, one or more SN counters, or one or more SN sequences.

In some embodiments, the allocation unit is configured to: allocate SN counter(s) or SN sequence(s), and/or determine the first SN, according to the first RA and the first TID.

In some embodiments, the allocation unit is further configured to: in a case where a recipient comprises a receiving STA that is non-MLD, allocate SN counter(s) or SN sequence(s), and/or determine the first SN, according to the first TID and the first RA of the receiving STA.

In some embodiments, the allocation unit is further configured to: in a case where a recipient comprises a receiving MLD, allocate SN counter(s) or SN sequence(s), and/or determine the first SN, according to an MAC address of a receiving MLD to which a receiving STA identified by the first RA is affiliated and the first TID.

In some embodiments, the QoS data corresponding to the first RA and/or the first TID adopts one or more of the following: one SN space, one SN counter, and one SN sequence.

In some embodiments, the allocation unit is configured to the allocate PN counter(s) or PN sequence(s), and/or determine the first PN, according to one or more of following: the first TA, the first RA, the first TID, the first priority, or the first flag.

In some embodiments, the allocation unit is further configured to: in a case where a recipient comprises a receiving STA that is non-MLD, allocate PN counter(s) or PN sequence(s), and/or determine the first PN, according to one or more of following: the first RA, the first RA of the receiving STA, the first TID, the first priority, or the first flag.

In some embodiments, the allocation unit is further configured to: in a case where a recipient comprises a receiving MLD, allocate PN counter(s) or PN sequence(s), and/or determine the first PN, according to one or more of following: an MAC address of a sending MLD to which a sending STA identified by the first TA is affiliated, an MAC address of a receiving MLD to which a receiving STA identified by the first RA is affiliated, the first TID, the first priority, or the first flag.

In some embodiments, QoS data corresponding to the first RA and/or the first TID adopts one or more of following: one or more PN spaces, one or more PN counters, or one or more PN sequences.

In some embodiments, the allocation unit is configured to allocate a PN counter or a PN sequence according to the first TA, the first RA, and the first TID or the first priority, and/or to determine the first PN.

In some embodiments, the allocation unit is further configured to: in a case where a recipient comprises a receiving STA that is non-MLD, allocate PN counter(s) or PN sequence(s), and/or determine the first PN, according to the first TA, the first RA of the receiving STA, and the first TID or the first priority.

In some embodiments, the allocation unit is further configured to: in a case where a recipient comprises a receiving MLD, allocate PN counter(s) or PN sequence(s), and/or determine the first PN, according to an MAC address of a sending MLD to which a sending STA identified by the first TA is affiliated, an MAC address of a receiving MLD to which a receiving STA identified by the first RA is affiliated, and the first TID or the first priority.

In some embodiments, the QoS data corresponding to the first RA and/or the first TID adopts one or more of the following: one PN space, one PN counter, and one PN sequence.

In some embodiments, the communication unit 802 is further configured to: transmit a second data unit after transmitting the first data unit.

In a transmission line, a position of the second data unit precedes a position of the first data unit.

The first flag is used to indicate that a transmission of the first data unit is urgent transmission, or to indicate a first urgency degree or a first latency requirement of transmitting the first data unit.

The second data unit comprises one or more of following: the first RA, the first TA, the first TID, the first priority, a second flag, a second SN, or a second PN.

The second flag is used to indicate that a transmission of a second data unit is non-urgent transmission, or to indicate a second urgency degree or a second latency requirement of transmitting the second data unit. The first urgency degree is greater than the second urgency degree, and the first latency requirement is more urgent than the second latency requirement.

In some embodiments, the first data unit further comprises a first flag. The communication unit 802 is further configured to transmit a third data unit after transmitting the first data unit;

In the transmission line, the position of the third data unit precedes the position of the first data unit.

The first flag is used to indicate that a transmission of the first data unit is urgent transmission, or to indicate a first urgency degree or a first latency requirement of transmitting the first data unit.

The third data unit includes one or more of the following: the first RA, the first TA, the first TID, the first priority, a third SN, and a third PN.

In some embodiments, the first flag and/or the first TID is included in a high throughput (HT) control field of the first data unit.

In some embodiments, the HT control field corresponds to a high efficient (HE) variant. The first flag and/or the first TID are comprised in a control subfield of an A-Control subfield of the HT control field.

In some embodiments, one or more of the first data unit, the second data unit, or the third data unit are included in one or more data units.

Each of the one or more data units comprises one of the following: a data frame, a data packet, QoS data, an MAC protocol data unit (MPDU), an MAC service data unit (MSDU), MSDUs, an aggregation-MSDU (A-MSDU), A-MSDUs, or a MAC management protocol data unit (MMPDU).

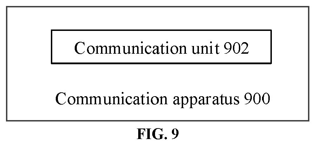

Fig. 9 is a schematic structure diagram of another communication apparatus provided by an embodiment of the present application. As shown in Fig. 9, the communication apparatus 900 includes a communication unit 900.

The communication unit 900 is configured to receive one or more data units. Each of at least a part of data units comprises one or more of following: a transmitter address (TA), a receiver address (RA), a traffic identifier (TID), a priority, a flag, a sequence number (SN), or a packet number (PN).

The SN and/or PN comprised in the each data unit are determined according to one or more of following: TA, RA, TID, priority, flag, whether out-of-order transmission is performed, or out-of-order transmission mode.

In some embodiments, the communication device 900 may further comprises a determination unit, which is configured to determine that each data unit includes one or more of the following: TA, RA, TID, priority, flag, SN, or PN.

In some embodiments, the flag comprised in each data unit is used to indicate that the transmission of the each data unit is urgent transmission, or to indicate that the transmission of the each data unit is non-urgent transmission, or to indicate the urgency degree or latency requirement of transmitting the each data unit.

In some embodiments, the communication device 900 may further include an allocation unit.

In some embodiments, the allocation unit is configured to: allocate and/or control reception reordering buffer(s) according to one or more of the following: TA, TID, or flag. The reception reordering buffer is used for reordering at least one data unit corresponding to one or more of TA, TID, or flag.

In some embodiments, the allocation unit is configured to: allocate and/or control reception reordering buffer(s) according to TA and TID. The reception reordering buffer is used for reordering at least one data unit corresponding to the TA and the TID.

In some embodiments, the communication unit 902 is further configured to deliver the one or more data units to a next MAC process or an upper layer according to the SN order of the one or more data units.

In some embodiments, the one or more data units comprise a fourth data unit. The communication unit 902 is further configured to: in a case where the fourth data unit is received and at least one fifth data unit is not received, deliver the fourth data unit to a next MAC process or an upper layer.

An SN corresponding to the fifth data unit is less than an SN corresponding to the fourth data unit, or a transmitting time of the fifth data unit is earlier than a transmitting time of the fourth data unit, or the time of filling SN of the fifth data unit is earlier than the time of filling SN of the fourth data unit.

The fourth data unit and the fifth data unit satisfy one or more of the following:
a priority of a TID comprised in the fourth data unit is higher than a priority of a TID comprised in the fifth data unit;
a flag comprised in the fourth data unit is used to indicate that a transmission of the fourth data unit is urgent transmission, and a flag comprised in the fifth data unit is used to indicate that a transmission of the fifth data unit is non-urgent transmission or the fifth data unit does not comprises flag; or
a flag comprised in the fourth data unit is used to indicate a third urgency degree or a third latency requirement of transmitting the fourth data unit, and a flag comprised in the fifth data unit is used to indicate a fourth urgency degree or a fourth latency requirement of transmitting the fifth data unit, the third urgency degree is greater than the fourth urgency degree, and the third latency requirement is more urgent than the fourth latency requirement.

In some embodiments, the communication unit 902 is further configured to: deliver the fourth data unit to a next MAC process or an upper layer in a case where the fourth data unit is received and at least one fifth data unit is not received and one or more of the following are satisfied:
a difference between an SN of the fourth data unit and a minimum value in SN(s) of the at least one fifth data unit is less than or equal to a first threshold value; or
a waiting time of the fourth data unit in the reception reordering buffer is greater than or equal to a second threshold.

In some embodiments, the allocation unit is configured to allocate replay counter(s) according to one or more of: TA, RA, TID, priority, or flag.

In some embodiments, the allocation unit is further configured to: in a case where the communication device comprises a receiving STA that is non-MLD, allocate replay counter(s) according to one or more of following: TA, RA of the receiving STA, TID, priority, or flag.

In some embodiments, the allocation unit is further configured to: in a case where the communication device comprises a receiving MLD, allocate replay counter(s) according to one or more of following: an MAC address of a sending MLD to which a sending STA identified by TA is affiliated, an MAC address of a receiving MLD to which a receiving STA identified by RA is affiliated, TID, priority, or flag.

In some embodiments, QoS data corresponding to each RA and/or each TID adopts one or more replay counters.

In some embodiments, the communication device 900 may further include a detection unit.

In some embodiments, the one or more data units comprise a sixth data unit. The detection unit is configured to determine that the sixth data unit passes replay detection in a case where a PN of the received sixth data unit is greater than a value of replay counter(s).

In some embodiments, the one or more data units comprise a seventh data unit. The detection unit is configured to discard the seventh data unit in a case where the PN of the received seventh data unit is less than or equal to the value of the replay counter(s).

In some embodiments, the one or more data units comprise an eighth data unit. The detection unit is configured to: in a case where a PN of the received eighth data unit is within a range of a PN window, determine that the eighth data unit passes the replay detection. A starting PN of the PN window is a difference between a last currently recorded PN and a size of the PN window, and an ending PN of the PN window is the last currently recorded PN.

In some embodiments, the one or more data units comprise a ninth data unit. The detection unit is configured to discard the ninth data unit in a case where the PN of the received ninth data unit is not within a range of the PN window.

In some embodiments, replay detection of PN is performed according to a PN window, in a case where QoS data corresponding to RA and/or TID adopts one or more of following: one PN space, one PN counter, or one PN sequence.

In some embodiments, replay detection of PN is performed according to a PN window, or replay detection of PN is performed according to PN replay counter(s), in a case where QoS data corresponding to RA and/or TID adopts one or more of following: a plurality of PN spaces, a plurality of PN counters, or a plurality of PN sequences.

In some embodiments, the flag and/or TID comprised by each data unit is comprised in an HT control field of the each data unit.

In some embodiments, the HT control field corresponds to an HE variant. The flag and/or TID comprised by each data unit is comprised in a control subfield of an A-Control subfield of the HT control field.

In some embodiments, each of the one or more data units comprises one of the following: a data frame, a data packet, QoS data, an MAC protocol data unit (MPDU), an MAC service data unit (MSDU), MSDUs, an aggregation-MSDU (A-MSDU), A-MSDUs, or a MAC management protocol data unit (MMPDU).

Those skilled in the art should understand that the related description of the above-described communication apparatus according to the embodiment of the present application may be understood with reference to the related description of the communication method according to the embodiment of the present application.

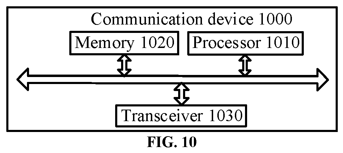

Fig. 10 is a schematic structure diagram of a communication device provided by an embodiment of the present application. The communication 1000 may comprises one of following: a first device, or a second device. The communication device 1000 illustrated in FIG. 10 may include a processor 1010, a memory 1020, and a transceiver 1030. The processor is configured to call and execute a computer program stored in the memory 1020, and the processor 1010 and the transceiver 1030 cooperate to enable the communication device 1000 to implement the method described in any one or more of the above embodiments. For example, the processor 1010 is configured to invoke and execute a computer program stored in the memory 1020 to cause the first device to perform the method in any one or more of the embodiments described above. For example, the processor 1010 is configured to invoke and execute a computer program stored in the memory 1020 to cause the second device to perform the method in any one or more of the embodiments described above.

Alternatively, the memory 1020 may be a separate device independent of the processor 1010 or may be integrated in the processor 1010.

Alternatively, as shown in FIG. 10, the processor 1010 may control the transceiver 1030 to communicate with other devices, specifically, may transmit information or data to other devices, or may receive information or data transmitted by other devices.

The transceiver 1030 may include a transmitter and a receiver. The transceiver 1030 may further include antennas, and the number of antennas may be one or more.

In some embodiments, the communication device 1000 may be the first device of the embodiments of the present application, and the communication device 1000 may implement corresponding processes implemented by the first device in each method according to the embodiments of the present application, and will not be described herein for the sake of conciseness.

In some embodiments, the communication device 1000 may be the second device of the embodiments of the present application, and the communication device 1000 may implement corresponding processes implemented by the second device in each method according to the embodiments of the present application, and will not be described herein for the sake of conciseness.

An embodiment of the present application also provides a computer storage medium storing one or more programs, and the one or more programs can be executed by one or more processors to implement the communication method in any embodiment of the present application.

In some embodiments, the computer-readable storage medium may be applied to the first device or second device according to the embodiments of the present application, and the computer-readable storage medium may cause a computer to implement corresponding processes implemented by the first device or second device in each method according to the embodiments of the present application, and will not be described herein for the sake of conciseness.

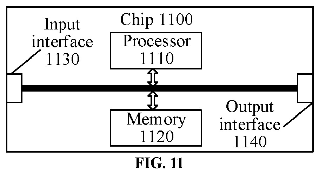

Fig. 11 is a schematic structure diagram of a chip of an embodiment of the present application. The chip 1100 shown in FIG. 11 comprises a processor 1110, which is configured to call and run a computer program from a memory to implement any method in the embodiments of the present application.

In some embodiments, as shown in FIG. 11, the chip 1100 may further comprise a memory 1120. Here, the processor 1110 may call and run a computer program from the memory 1120 to implement the methods in the embodiments of the present application.

The memory 1120 may be a separate device independent of the processor 1110 or may be integrated in the processor 1110.

In some embodiments, the chip 1100 may further include an input interface 1130. The processor 1110 may control the input interface 1130 to communicate with other devices or chips, specifically, may acquire information or data transmitted by other devices.

In some embodiments, the chip 1100 may further include an output interface140. The processor 1110 may control the output interface 1140 to communicate with other devices or chips, specifically, may output information or data to other devices or chips.

In some embodiments, the chip may be applied to the first device according to the embodiments of the present application, and the chip may implement corresponding processes implemented by the first device in each method according to the embodiments of the present application, and will not be described herein for the sake of conciseness.

In some embodiments, the chip may be applied to the second device according to the embodiments of the present application, and the chip may implement corresponding processes implemented by the second device in each method according to the embodiments of the present application, and will not be described herein for the sake of conciseness.

It should be understood that the chip mentioned in the embodiments of the present application may also be referred to as a system-level-chip, a system chip, a chip system or a system-on-chip chip.

An embodiment of the present application further provides a computer program product, which comprises a computer storage medium. The computer storage medium stores a computer program comprising instructions executable by at least one processor, and when the instructions are executed by the at least one processor, the communication method of any embodiment of the present application is implemented.

In some embodiments, the computer program product may be applied to the first device or second device according to the embodiments of the present application, and the computer program product may cause a computer to implement corresponding processes implemented by the first device or second device in each method according to the embodiments of the present application, and will not be described herein for the sake of conciseness.

Alternatively, the computer program product in the embodiment of the present application may also be referred to as a software product in other embodiments.

An embodiment of the present application further provides a computer program. The computer program causes a computer to execute the communication method of any embodiment of the present application.

In some embodiments, the computer program may be applied to the first device or second device according to the embodiments of the present application, and when the computer program is run on a computer, the computer may be caused to implement corresponding processes implemented by the first device or second device in each method according to the embodiments of the present application, and will not be described herein for the sake of conciseness.

The processor, communication apparatus or chip of the embodiment of the present application may be an integrated circuit chip having signal processing capabilities. In the implementation process, the steps of the above-described method embodiments may be completed by integrated logic circuits of hardware in the processor or instructions in the form of software. The processor, communication device, or chip described above may include an integration of any one or more of following: a general purpose processor, an application specific integrated circuit (ASIC), a digital signal processor (DSP), a digital signal processing device (DSPD), a programmable logic device (PLD), a field programmable gate array (FPGA), a central processing unit (CPU), a graphics processing unit (GPU), embedded neural-network processing units (NPUs), controllers, microcontrollers, microprocessors, programmable logic elements, discrete gate or transistor logic devices, or discrete hardware components, which may implement or execute the methods, steps, and logical block diagrams disclosed in the embodiments of the present application. The general purpose processor may be a microprocessor or the processor, or may be any conventional processor or the like. The steps of the method disclosed in connection with the embodiments of the present application may be directly embodied as execution by the hardware decoding processor, or may be executed by combining hardware and software modules in the decoding processor. The software module may be located in a storage medium mature in the art, such as random access memory, flash memory, read-only memory, programmable read-only memory, or electrically erasable and writable programmable memory, registers, etc. The storage medium is located in the memory, and the processor reads the information in the memory, and combines its hardware to complete the steps of the above method.

It is understood that the memory or computer storage medium in the embodiments of the present application may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration, but not by way of limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable type of memory.

It should be understood that the above memory or computer storage medium is illustrative but not limiting, for example, the memory in the embodiments of the present application may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in embodiments of the present application is intended to include, but is not limited to, these and any other suitable types of memory.

Those of ordinary skill in the art will appreciate that the elements and algorithmic steps of the various examples described in combination with the embodiments disclosed herein can be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present application.

Those skilled in the art can clearly understand that for convenience and conciseness of the description, the specific working processes of the systems, devices, and units described above may refer to the corresponding processes in the aforementioned method embodiments, and will not be repeatedly described herein.

In several embodiments provided herein, it should be understood that the disclosed systems, apparatuses, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solution of the present embodiment.

In addition, each functional unit in each embodiment of the present application may be integrated in one processing unit, each unit may be physically present alone, or two or more units may be integrated in one unit.

In any one embodiment of the present application, the time interval, the time period, the time range, the time duration, the time window, and the like may include all of the endpoint time, or may include a part of the endpoint time (for example, including the left endpoint time but not including the right endpoint time, or including the right endpoint time but not including the left endpoint time), or may not include the endpoint time.

The functions may be stored in a computer-readable storage medium if implemented in the form of software functional units and sold or used as independent products. Based on such an understanding, the technical solutions according to the application in essence or the part contributing to the prior art can be embodied in the form of a software product, and the computer software product is stored in a storage medium, which includes several instructions so that a computer device (may be a personal computer, a server, a network device or the like) implements all or part of steps of the method according to respective embodiments of the application. The aforementioned storage medium includes various media capable of storing a program code such as a USB disk, a mobile hard drive disk, a Read-Only Memory (ROM), a Random Access Memory (RAM), a magnetic disk or an optical disk.

The above is merely a specific embodiment of the present application, but the scope of protection of the present application is not limited thereto, and any change or substitution, within the technical scope disclosed in the present application, that can be easily thought of by the person skilled in the art should be covered within the scope of protection of the present application. Therefore, the scope of protection of the present application should be subject to the scope of protection of the claims.

## Claims

1. A communication method, comprising:
transmitting, by a first device, a first data unit, wherein the first data unit comprises one or more of following: a first receiver address (RA), a first transmitter address (TA), a first traffic identifier (TID), a first priority, a first flag, a first sequence number (SN), or a first packet number (PN),
wherein the first SN and/or the first PN are determined according to one or more of following:
the first RA, the first TA, the first TID, the first priority, the first flag, whether out-of-order transmission is performed, or an out-of-order transmission mode.

2. The method according to claim 1, wherein the first flag is used to indicate that a transmission of the first data unit is urgent transmission, or to indicate that a transmission of the first data unit is non-urgent transmission, or to indicate a first urgency degree or a first latency requirement of transmitting the first data unit.

3. The method according to claim 1 or 2, comprising:
allocating, by the first device, SN counter(s) or SN sequence(s), and/or determining, by the first device, the first SN, according to one or more of following: the first RA, the first TID, or the first flag.

4. The method according to claim 3, wherein the allocating, by the first device, SN counter(s) or SN sequence(s), and/or determining, by the first device, the first SN, according to one or more of following: the first RA, the first TID, and/or the first flag,
in a case where a recipient comprises a receiving STA that is non-multi-link device (MLD), allocating, by the first device, the SN counter(s) or the SN sequence(s), and/or determining, by the first device, the first SN, according to one or more of following: the first RA of the receiving STA, the first TID, or the first flag; and/or,
in a case where a recipient comprises a receiving MLD, allocating, by the first device, the SN counter(s) or the SN sequence(s), and/or determining, by the first device, the first SN, according to one or more of following: a media access control (MAC) address of a receiving MLD to which a receiving STA identified by the first RA is affiliated, the first TID, or the first flag.

5. The method according to any one of claims 1 to 4, wherein quality of service (QoS) data corresponding to the first RA and/or the first TID adopts one or more of following: one or more SN spaces, one or more SN counters, or one or more SN sequences.

6. The method according to any one of claims 1 to 3, further comprising:
allocating, by the first device, SN counter(s) or SN sequence(s), and/or determining, by the first device, the first SN, according to the first RA and the first TID.

7. The method according to claim 6, wherein the allocating, by the first device, SN counter(s) or SN sequence(s), and/or determining, by the first device, the first SN, according to the first RA and the first TID comprises:
in a case where a recipient comprises a receiving STA that is non-MLD, allocating, by the first device, the SN counter(s) or the SN sequence(s), and/or determining, by the first device, the first SN, according to the first RA and the first TID of the receiving STA; and/or,
in a case where a recipient comprises a receiving MLD, allocating, by the first device, the SN counter(s) or the SN sequence(s), and/or determining, by the first device, the first SN, according to a media access control (MAC) address of a receiving MLD to which a receiving STA identified by the first RA is affiliated and the first TID.

8. The method according to any one of claims 1 to 7, wherein QoS data corresponding to the first RA and/or the first TID adopts one or more of following: one SN space, one SN counter, or one SN sequence.

9. The method according to any one of claims 1 to 8, further comprising:
allocating, by the first device, PN counter(s) or PN sequence(s), and/or determining, by the first device, the first PN, according to one or more of following: the first TA, the first RA, the first TID, the first priority, or the first flag.

10. The method according to claim 9, wherein the allocating, by the first device, PN counter(s) or PN sequence(s), and/or determining, by the first device, the first PN, according to one or more of following: the first TA, the first RA, the first TID, the first priority, or the first flag comprises:
in a case where a recipient comprises a receiving STA that is non-MLD, allocating, by the first device, the PN counter(s) or the PN sequence(s), and/or determining, by the first device, the first PN, according to one or more of following: the first RA, the first RA of the receiving STA, the first TID, the first priority, or the first flag; and/or,
in a case where a recipient comprises a receiving MLD, allocating, by the first device, the PN counter(s) or the PN sequence(s), and/or determining, by the first device, the first PN, according to one or more of following: an MAC address of a sending MLD to which a sending STA identified by the first TA is affiliated, an MAC address of a receiving MLD to which a receiving STA identified by the first RA is affiliated, the first TID, the first priority, or the first flag.

11. The method according to any one of claims 1 to 10, wherein QoS data corresponding to the first RA and/or the first TID adopts one or more of following: one or more PN spaces, one or more PN counters, or one or more PN sequences.

12. The method according to any one of claims 1 to 9, further comprising:
allocating, by the first device, PN counter(s) or SN sequence(s), and/or determining, by the first device, the first PN, according to the first TA, the first RA, and the first TID or the first priority.

13. The method according to claim 12, the allocating, by the first device, PN counter(s) or SN sequence(s) or the first PN, according to the first TA, the first RA, and the first TID or the first priority comprises:
in a case where a recipient comprises a receiving STA that is non-MLD, allocating, by the first device, the PN counter(s) or the PN sequence(s), and/or determining, by the first device, the first PN, according to the first TA, the first RA of the receiving STA, and the first TID or the first priority; and/or
in a case where a recipient comprises a receiving MLD, allocating, by the first device, the PN counter(s) or the PN sequence(s), and/or determining, by the first device, the first PN, according to an MAC address of a sending MLD to which a sending STA identified by the first TA is affiliated, an MAC address of a receiving MLD to which a receiving STA identified by the first RA is affiliated, and the first TID or the first priority.

14. The method according to any one of claims 1 to 13, wherein QoS data corresponding to the first RA and/or the first TID adopts one or more of following: one PN space, one PN counter, or one PN sequence.

15. The method according to any one of claims 1 to 14, wherein after the transmitting, by a first device, a first data unit, the method further comprises: transmitting, by the first device, a second data unit,
wherein in a transmission line, a position of the second data unit precedes a position of the first data unit;
the first flag is used to indicate that a transmission of the first data unit is urgent transmission, or to indicate a first urgency degree or a first latency requirement of transmitting the first data unit;
the second data unit comprises one or more of following: the first RA, the first TA, the first TID, the first priority, a second flag, a second SN, or a second PN;
the second flag is used to indicate that a transmission of a second data unit is non-urgent transmission, or to indicate a second urgency degree or a second latency requirement of transmitting the second data unit, wherein the first urgency degree is greater than the second urgency degree, and the first latency requirement is more urgent than the second latency requirement.

16. The method according to any one of claims 1 to 14, wherein after the transmitting, by a first device, a first data unit, the method further comprises: transmitting, by the first device, a third data unit,
wherein in the transmission line, a position of the third data unit precedes a position of the first data unit;
the first flag is used to indicate that the transmission of the first data unit is urgent transmission, or to indicate a first urgency degree or a first latency requirement of transmitting the first data unit;
the third data unit comprises one or more of following: the first RA, the first TA, the first TID, the first priority, a third flag, a third SN, or a third PN.

17. The method according to any one of claims 1 to 16, wherein the first flag and/or the first TID are comprised in a high throughput (HT) control field of the first data unit.

18. The method according to claim 17, wherein the HT control field corresponds to a high efficient (HE) variant, the first flag and/or the first TID are comprised in a control subfield of an A-Control subfield of the HT control field.

19. The method according to any one of claims 1 to 18, wherein one or more of the first data unit, the second data unit, or the third data unit are comprised in one or more data units,
wherein each of the one or more data units comprises one of following: a data frame, a data packet, QoS data, an MAC protocol data unit (MPDU), an MAC service data unit (MSDU), MSDUs, an aggregation-MSDU (A-MSDU), A-MSDUs, or a MAC management protocol data unit (MMPDU).

20. A communication method, comprising:
receiving, by a second device, one or more data units, wherein each of at least a part of data units comprises one or more of following: a transmitter address (TA), a receiver address (RA), a traffic identifier (TID), a priority, a flag, a sequence number (SN), or a packet number (PN),
wherein the SN and/or PN comprised in the each data unit are determined according to one or more of following:
TA, RA, TID, priority, flag, whether out-of-order transmission is performed, or out-of-order transmission mode.

21. The method according to claim 20, wherein the flag comprised in the each data unit is used to indicate that a transmission of the each data unit is urgent transmission, or to indicate that a transmission of the each data unit is non-urgent transmission, or to indicate a urgency degree or a latency requirement of transmitting the each data unit.

22. The method according to claim 20 or 21, comprising:
allocating and/or controlling, by the second device, reception reordering buffer(s) according to one or more of following: TA, TID, or flag, wherein the reception reordering buffer is used to reorder at least one data unit corresponding to one or more of TA, TID, or flag.

23. The method according to any one of claims 20 to 22, further comprising:
allocating and/or controlling, by the second device, reception reordering buffer(s) according to TA and TID, wherein the reception reordering buffer(s) is used to reorder at least one data unit corresponding to TA and TID.

24. The method according to any one of claims 20 to 23, further comprising:
delivering, by the second device, the one or more data units to a next MAC process or an upper layer according to an SN order of the one or more data units.

25. The method according to any one of claims 20 to 23, the one or more data units comprises a fourth data unit, wherein the method further comprises: in a case where the fourth data unit is received and at least one fifth data unit is not received, delivering, by the second device, the fourth data unit to a next MAC process or an upper layer,
wherein an SN corresponding to the fifth data unit is less than an SN corresponding to the fourth data unit, or a transmitting time of the fifth data unit is earlier than a transmitting time of the fourth data unit, or the time of filling SN of the fifth data unit is earlier than the time of filling SN of the fourth data unit,
wherein the fourth data unit and the fifth data unit satisfies one or more of following:
a priority of a TID comprised in the fourth data unit is higher than a priority of a TID comprised in the fifth data unit;
a flag comprised in the fourth data unit is used to indicate that a transmission of the fourth data unit is urgent transmission, and a flag comprised in the fifth data unit is used to indicate that a transmission of the fifth data unit is non-urgent transmission or the fifth data unit does not comprise a flag; or
a flag comprised in the fourth data unit is used to indicate a third urgency degree or a third latency requirement of transmitting the fourth data unit, and a flag comprised in the fifth data unit is used to indicate a fourth urgency degree or a fourth latency requirement of transmitting the fifth data unit, wherein the third urgency degree is greater than the fourth urgency degree, and the third latency requirement is more urgent than the fourth latency requirement.

26. The method according to claim 25, wherein the in a case where the fourth data unit is received and at least one fifth data unit is not received, delivering, by the second device, the fourth data unit to a next MAC process or an upper layer comprises:
delivering, by the second device, the fourth data unit to the next MAC process or the upper layer, in a case where the fourth data unit is received, the at least one fifth data unit is not received, and one or more of following are satisfied:
a difference between an SN of the fourth data unit and a minimum value in SN(s) of the at least one fifth data unit is less than or equal to a first threshold value; or
a waiting time of the fourth data unit in the reception reordering buffer is greater than or equal to a second threshold.

27. The method according to any one of claims 20 to 26, further comprising:
allocating, by the second device, replay counter(s) according to one or more of following: TA, RA, TID, priority, or flag.

28. The method according to claim 27, the allocating, by the second device, replay counter(s) according to one or more of following: TA, RA, TID, priority, or flag comprises:
in a case where the second device comprises a receiving STA that is non-MLD, allocating, by the second device, replay counter(s) according to one or more of following: TA, RA of the receiving STA, TID, priority, or flag; and/or
in a case where the second device comprises a receiving MLD, allocating, by the second device, replay counter(s) according to one or more of following: an MAC address of a sending MLD to which a sending STA identified by TA is affiliated, an MAC address of a receiving MLD to which a receiving STA identified by RA is affiliated, TID, priority, or flag.

29. The method according to any one of claims 20 to 28, wherein QoS data corresponding to each RA and/or each TID adopts one or more replay counters.

30. The method according to any one of claims 27 to 29, wherein the one or more data units comprises a sixth data unit and/or a seventh data unit, and the method further comprises:
in a case where a PN of the sixth data unit received by the second device is greater than a value of the replay counter(s), determining, by the second device, that the sixth data unit passes replay detection; and/or,
in a case where a PN of the seventh data unit received by the second device is less than or equal to a value of the replay counter(s), discarding the seventh data unit.

31. The method according to any one of claims 20 to 29, wherein the one or more data units comprises an eighth data unit and/or a ninth data unit, and the method further comprises:
in a case where a PN of the eighth data unit received by the second device is within a range of a PN window, determining, by the second device, that the eighth data unit passes replay detection, wherein a starting PN of the PN window is a difference between a last currently recorded PN and a size of the PN window, and an ending PN of the PN window is the last currently recorded PN; and/or,
in a case where a PN of the ninth data unit received by the second device is not within a range of a PN window, discarding, by the second device, the ninth data unit.

32. The method according to any one of claims 20 to 31, in a case where QoS data corresponding to RA and/or TID adopts one or more of following: one PN space, one PN counter, or one PN sequence, performing, by the second device, replay detection of PN according to a PN window.

33. The method according to any one of claims 20 to 31, in a case where QoS data corresponding to RA and/or TID adopts one or more of following: a plurality of PN spaces, a plurality of PN counters, or a plurality of PN sequences, performing, by the second device, replay detection of PN according to a PN window, or performing, the second device, replay detection of PN according to PN replay counter(s).

34. The method of any one of claims 20 to 33, wherein flag and/or TID comprised in the each data unit are comprised in an HT control field of the each data unit.

35. The method of claim 34, wherein the HT control field corresponds to an HE variant, and the flag and/or TID comprised in the each data unit are comprised in a control subfield of an A-Control subfield of the HT control field.

36. The method of any one of claims 20 to 35, wherein each of the one or more data units comprises one of following: a data frame, a data packet, QoS data, an MAC protocol data unit (MPDU), an MAC service data unit (MSDU), MSDUs, an aggregation-MSDU (A-MSDU), A-MSDUs, or a MAC management protocol data unit (MMPDU).

37. A communication apparatus, comprising:
a communication unit, configured to transmit a first data unit, wherein the first data unit comprises one or more of following: a first receiver address (RA), a first transmitter address (TA), a first traffic identifier (TID), a first priority, a first flag, a first sequence number (SN), or a first packet number (PN),
wherein the first SN and/or the first PN are determined according to one or more of following:
the first RA, the first TA, the first TID, the first priority, the first flag, whether out-of-order transmission is performed, or an out-of-order transmission mode.

38. A communication apparatus, comprising:
a communication unit, configured to receive one or more data units; wherein each of at least a part of data units comprises one or more of following: a transmitter address (TA), a receiver address (RA), a traffic identifier (TID), a priority, a flag, a sequence number (SN), or a packet number (PN),
wherein the SN and/or PN comprised in the each data unit are determined according to one or more of following:
TA, RA, TID, priority, flag, whether out-of-order transmission is performed, or out-of-order transmission mode.

39. A first device, comprising: a processor, a memory, and a transceiver,
wherein the processor is configured to invoke and execute a computer program stored in the memory, and the processor and the transceiver cooperate to enable the first device to implement the method of any one of claims 1 to 19.

40. A second device, comprising: a processor, a memory, and a transceiver,
wherein the processor is configured to invoke and execute a computer program stored in the memory, and the processor and the transceiver cooperate to enable the second device to implement the method of any one of claims 20 to 36.

41. A computer storage medium, wherein the computer storage medium stores one or more computer programs, the one or more computer programs are executable by one or more processors to implement the method of any one of claims 1 to 34.

42. A chip comprising: a processor for invoking and executing a computer program from a memory to implement a method of any of claims 1 to 36.

43. A computer program product, comprising a computer storage medium, wherein the computer storage medium stores a computer program comprising instructions executable by at least one processor, and when the instructions are executed by the at least one processor, the method of any one of claims 1 to 36 is implemented.

44. A computer program, wherein the computer program causes a computer to implement the method of any one of claims 1 to 36.
